(19) Europäisches Patentamt / European Patent Office / Office européen des brevets

(11) **EP 4 676 140 A1**

(12) **EUROPEAN PATENT APPLICATION**
published in accordance with Art. 153(4) EPC

(43) Date of publication:
**07.01.2026 Bulletin 2026/02**

(21) Application number: **23924572.3**

(22) Date of filing: **28.02.2023**

(51) International Patent Classification (IPC):
***H04W 72/0446*** *(2023.01)*

(52) Cooperative Patent Classification (CPC):
**H04W 72/0446**

(86) International application number:
**PCT/CN2023/078680**

(87) International publication number:
**WO 2024/178597 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **CUI, Shengjiang
Dongguan, Guangdong 523860 (CN)**

(74) Representative: **Taor, Simon Edward William et al
Venner Shipley LLP
200 Aldersgate
London EC1A 4HD (GB)**

(54) **WIRELESS COMMUNICATION METHOD, ENVIRONMENT-ENERGY AMP DEVICE, AND NETWORK DEVICE**

(57)     A wireless communication method, an ambient power-enabled (AMP) device, and a network device are provided. The method includes the following. An AMP device receives a first signal sent by a network device, where the first signal is used for determining a resource for a random access channel. The AMP device sends the random access channel to the network device according to the first signal.

FIG. 7

EP 4 676 140 A1

**Description**

TECHNICAL FIELD

Embodiments of the disclosure relate to the field of communication, and more particularly, to a wireless communication method, an ambient power-enabled (AMP) device, and a network device.

BACKGROUND

In a new radio (NR) system, a terminal device can access a network through a four-step random access procedure or two-step random access procedure, to communicate with a network device.

In zero-power communication, a zero-power device needs to collect ambient energy (for example, radio frequency (RF) energy, optical energy, solar energy, thermal energy, and the like) to obtain energy used for communication. Due to limited capability of the zero-power device, a conventional random access method cannot satisfy requirements of the zero-power device, and therefore, it is required to design a random access method applicable to the zero-power device.

SUMMARY

A wireless communication method, an ambient power-enabled (AMP) device, and a network device are provided, which can realize random access of a zero-power device.

In a first aspect, a wireless communication method is provided. The method includes the following. An AMP device receives a first signal sent by a network device, where the first signal is used for determining a resource for a random access channel. The AMP device sends the random access channel to the network device according to the first signal.

In a second aspect, a wireless communication method is provided. The method includes the following. A network device sends a first signal to an AMP device, where the first signal is used for determining a resource for a random access channel. The network device receives, according to the first signal, the random access channel sent by the AMP device.

In a third aspect, a terminal device is provided. The terminal device is configured to perform the method in the first aspect or various implementations of the first aspect. Specifically, the terminal device includes functional modules for performing the method in the first aspect or various implementations of the first aspect.

In a fourth aspect, a network device is provided. The network device is configured to perform the method in the second aspect or various implementations of the second aspect. Specifically, the network device includes functional modules for performing the method of the second aspect or various implementations of the second aspect.

In a fifth aspect, a terminal device is provided. The terminal device includes a processor and a memory. The memory is configured to store computer programs. The processor is configured to invoke and execute the computer programs stored in the memory, to perform the method in the first aspect or various implementation of the first aspect.

In a sixth aspect, a network device is provided. The network device includes a processor and a memory. The memory is configured to store computer programs. The processor is configured to invoke and execute the computer programs stored in the memory, to perform the method in the second aspect or various implementations of the second aspect.

In a seventh aspect, a chip is provided. The chip is configured to implement the method of any one of the first aspect to the second aspect or in various implementations of the first aspect to the second aspect. Specifically, the chip includes a processor. The processor is configured to invoke and execute computer programs from a memory, to cause a device equipped with the apparatus to perform the method in any one of the first aspect to the second aspect or various implementations of the first aspect to the second aspect.

In an eighth aspect, a computer-readable storage medium is provided. The computer-readable storage medium is configured to store computer programs which are operable with a computer to perform the method of any one of the first aspect to the second aspect or in various implementations of the first aspect to the second aspect.

In a ninth aspect, a computer program product is provided. The computer program product includes computer program instructions which are operable with a computer to perform the method in any one of the first aspect to the second aspect or in various implementations of the first aspect to the second aspect.

In a tenth aspect, a computer program is provided. The computer program, when executed by a computer, is operable with the computer to perform the method in any one of the first aspect to the second aspect or in various implementations of the first aspect to the second aspect.

With the technical solution, the AMP device determines the resource for the random access channel according to the first signal from the network device, and then sends the random access channel over the resource.

BRIEF DESCRIPTION OF THE DRAWINGS

FIG. 1 is a schematic architectural diagram of a communication system provided in embodiments of the disclosure.
FIG. 2 is a schematic diagram of a zero-power communication system according to an example of the disclosure.
FIG. 3 is a schematic diagram illustrating energy harvesting according to an embodiment of the disclosure.
FIG. 4 is a schematic diagram illustrating backscattering communication according to an embodiment of the disclosure.
FIG. 5 is a schematic circuit diagram illustrating resistance-based load modulation according to an embodiment of the disclosure.
FIG. 6 is a schematic diagram illustrating a random access procedure in the related art.
FIG. 7 is a schematic diagram of a wireless communication method provided in embodiments of the disclosure.
FIG. 8 is a schematic diagram illustrating a first signal provided in embodiments of the disclosure.
FIG. 9 is a schematic diagram illustrating a manner for determining a basic time unit of a random access channel provided in embodiments of the disclosure.
FIG. 10 is a schematic diagram illustrating another manner for determining a basic time unit of a random access channel provided in embodiments of the disclosure.
FIG. 11 is a schematic diagram illustrating a manner for sending a first signal provided in embodiments of the disclosure.
FIG. 12 is a schematic diagram illustrating carrying control information for random access or paging information or scheduling information in a first signal provided in embodiments of the disclosure.
FIG. 13 is a schematic diagram illustrating indicating a position of a first signal via a paging signal provided in embodiments of the disclosure.
FIG. 14 is a schematic diagram illustrating a time-domain resource window for random access provided in embodiments of the disclosure.
FIG. 15 is a schematic diagram illustrating an association between a first signal and a time-domain resource window for random access provided in embodiments of the disclosure.
FIG. 16 is a schematic diagram illustrating an association between a first signal and a frequency-domain resource for a random access channel provided in embodiments of the disclosure.
FIG. 17 is a schematic structural diagram illustrating a random access channel provided in embodiments of the disclosure.
FIG. 18 is a schematic block diagram of an ambient power-enabled (AMP) device provided in embodiments of the disclosure.
FIG. 19 is a schematic block diagram of a network device provided in embodiments of the disclosure.
FIG. 20 is a schematic block diagram of a communication device provided in embodiments of the disclosure.
FIG. 21 is a schematic block diagram of a chip provided in embodiments of the disclosure.
FIG. 22 is a schematic block diagram of a communication system provided in embodiments of the disclosure.

DETAILED DESCRIPTION

The following will describe technical solutions of embodiments of the disclosure with reference to the accompanying drawings in embodiments of the disclosure. Apparently, embodiments described herein are merely some embodiments, rather than all embodiments, of the disclosure. Based on the embodiments of the disclosure, all other embodiments obtained by those of ordinary skill in the art without creative effort shall fall within the protection scope of the disclosure.

The technical solutions of embodiments of the disclosure are applicable to various communication systems, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi), a 5th-generation (5G) communication system, a cellular internet of things (IoT) system, a cellular passive IoT system, or other communication systems.

Generally speaking, a conventional communication system generally supports a limited quantity of connections and therefore is easy to implement. However, with development of communication technology, a mobile communication system will not only support conventional communication but also support, for example, device to device (D2D) communication, machine to machine (M2M) communication, machine type communication (MTC), vehicle to vehicle (V2V) communication, or vehicle to everything (V2X) communication, etc. Embodiments of the disclosure can also be applied to these communication systems.

Optionally, the communication system in embodiments of the disclosure may be applied to a carrier aggregation (CA) scenario, or may be applied to a dual connectivity (DC) scenario, or may be applied to a standalone (SA) network deployment scenario.

Optionally, the communication system in embodiments of the disclosure is applicable to an unlicensed spectrum, and an unlicensed spectrum may be regarded as a shared spectrum. Or the communication system in embodiments of the disclosure is applicable to a licensed spectrum, and a licensed spectrum may be regarded as a non-shared spectrum.

Various embodiments of the disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user device, etc.

In embodiments of the disclosure, the network device may be a device configured to communicate with a mobile device, and the network device may be an access point (AP) in a WLAN, a base transceiver station (BTS) in GSM or CDMA, or may be a Node B (NB) in WCDMA, or may be an evolutional Node B (eNB or eNodeB) in LTE, or a relay station or AP, or an in-vehicle device, a wearable device, a network device (gNB) in an NR network, a network device in a cellular IoT, a network device in a cellular passive IoT, a network device in a future evolved PLMN, or a network device in an NTN, etc.

By way of explanation rather than limitation, in embodiments of the disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In embodiments of the disclosure, the network device serves a cell, and the terminal device communicates with the network device on a transmission resource (for example, a frequency-domain resource or a spectrum resource) for the cell. The cell may be a cell corresponding to the network device (for example, a base station). The cell may belong to a macro base station, or may belong to a base station corresponding to a small cell. The small cell may include: a metro cell, a micro cell, a pico cell, a femto cell, and the like. These small cells are characterized by small coverage and low transmission power and are adapted to provide data transmission service with high-rate.

The terminal device may be a station (ST) in a WLAN, a cellular radio telephone, a cordless telephone, a session initiation protocol (SIP) telephone, a wireless local loop (WLL) station, a personal digital assistant (PDA), a handheld device or a computing device with wireless communication functions, other processing devices coupled with a wireless modem, an in-vehicle device, a wearable device, and a terminal device in a next-generation communication system, for example, a terminal device in an NR network, a terminal device in a future evolved public land mobile network (PLMN), a terminal device in a cellular IoT, or a terminal device in a cellular passive IoT.

In embodiments of the disclosure, the terminal device may be deployed on land, which includes indoor or outdoor, handheld, wearable, or in-vehicle. The terminal device may also be deployed on water (such as ships, etc.). The terminal device may also be deployed in the air (such as airplanes, balloons, satellites, etc.).

In embodiments of the disclosure, the terminal device may be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, or a wireless terminal device in smart home, etc.

By way of explanation rather than limitation, in embodiments of the disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

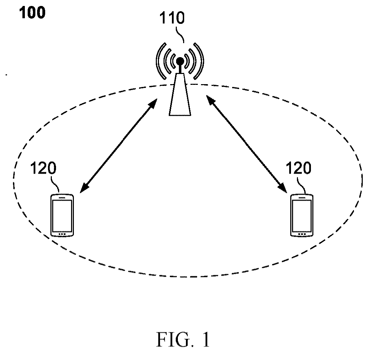

Exemplarily, FIG. 1 illustrates a communication system 100 to which embodiments of the disclosure are applied. The communication system 100 may include a network device 110. The network device 110 may be a device for communicating with a terminal device 120 (also referred to as "communication terminal" or "terminal"). The network device 110 can provide a communication coverage for a specific geographical area and communicate with terminal devices in the coverage area.

FIG. 1 exemplarily illustrates one network device and two terminal devices. Optionally, the communication system 100 may also include multiple network devices, and there can be other quantities of terminal devices in a coverage area of each of the network devices. Embodiments of the disclosure are not limited in this regard.

Optionally, the communication system 100 may further include other network entities such as a network controller, a mobility management entity, or the like, and embodiments of the disclosure are not limited in this regard.

It should be understood that, in embodiments of the disclosure, a device with communication functions in a network/system can be referred to as a "communication device". Taking the communication system 100 illustrated in FIG. 1 as an example, the communication device may include the network device 110 and the terminal device(s) 120 that have communication functions. The network device 110 and the terminal device(s) 120 can be the devices described above and will not be elaborated again herein. The communication device may further include other devices such as a network controller, a mobility management entity, or other network entities in the communication system 100, and embodiments of the disclosure are not limited in this regard.

It should be understood that, the terms "system" and "network" herein are usually used interchangeably throughout this disclosure. The term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship.

It should be understood that, "indication" referred to in embodiments of the disclosure may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that that there is an association relationship between A and B.

In the elaboration of embodiments of the disclosure, the term "correspondence" may mean that there is a direct or indirect correspondence between the two, may mean that there is an association between the two, or may mean a relationship of indicating and indicated or configuring and configured, etc.

In embodiments of the disclosure, the "pre-defined" can be implemented by pre-saving a corresponding code or table in a device (for example, including the terminal device and the network device) or in other manners that can be used for indicating related information, and the disclosure is not limited in this regard. For example, the "pre-defined" may mean defined in a protocol.

In embodiments of the disclosure, the "protocol" may refer to a communication standard protocol, which may include, for example, an LTE protocol, an NR protocol, and a protocol applied to a future communication system, and the disclosure is not limited in this regard.

In order to facilitate understanding of technical solutions of embodiments of the disclosure, the related art of the disclosure will be described.

I. Zero-power communication

Key technology for zero-power communication includes energy harvesting, backscattering communication, and low-power technology.

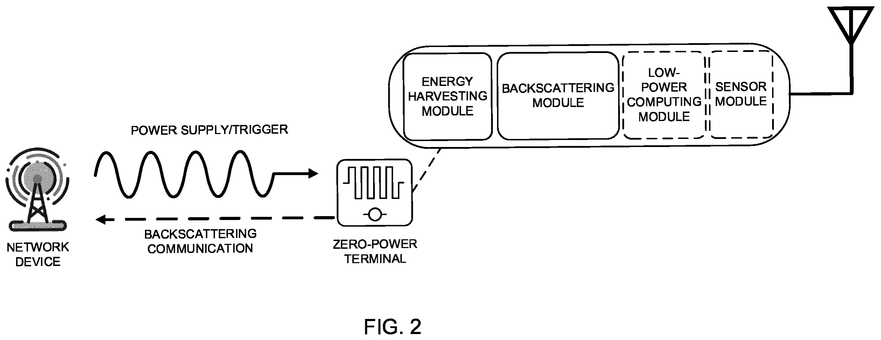

As illustrated in FIG. 2, a typical zero-power communication system (for example, a radio-frequency identity (RFID) system) includes a network device (for example, a reader in the RFID system) and a zero-power device (for example, a tag). The network device is configured to transmit an RF power-supply signal and a downlink communication signal to the zero-power device and receive a backscattered signal from the zero-power device. A basic zero-power device includes an energy harvesting module, a backscattering module, and a low-power computing module. In addition, the zero-power device can further include a memory or a sensor configured to store some basic information (such as object identity) or sensor data such as ambient temperature and ambient humidity.

For example, the energy harvesting module can harvest energy carried in a radio waves in space (a radio wave emitted by the network device is illustrated in FIG. 2), to drive the low-power computing module in the zero-power device and realize backscattering communication. After obtaining energy, the zero-power device can receive a control command from the network device and transmit data to the network device through backscattering based on control signaling. The data transmitted can be data stored in the zero-power device itself (e.g., an identity identifier or pre-written information, such as the date, brand, and manufacturer of a product). The zero-power device can also be equipped with various sensors, so as to report data collected by the sensors based on a zero-power mechanism.

Key technology for zero-power communication will be described below.

1. RF power harvesting

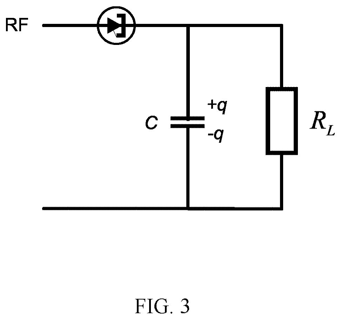

As illustrated in FIG. 3, an RF power harvesting module harvests power of a spatial electromagnetic wave through electromagnetic induction, to obtain power for driving a zero-power device, for example, driving a low-power demodulation and modulation module, driving a sensor, and reading a memory, etc. Therefore, a conventional battery is not needed for a zero-power device.

2. Backscattering communication

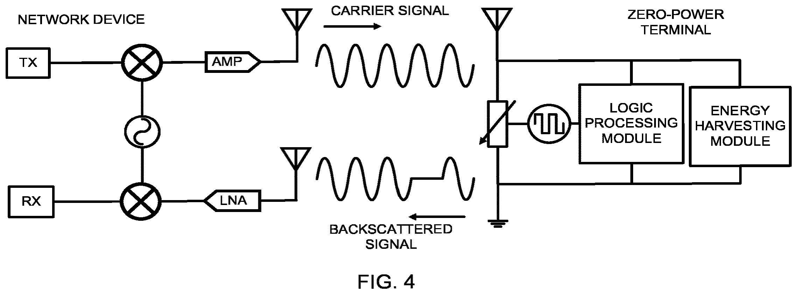

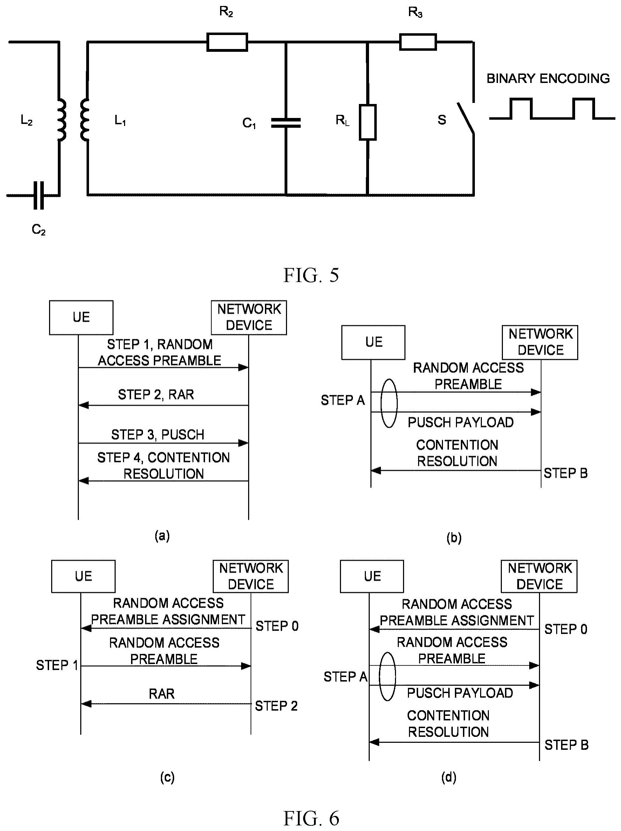

As illustrated in FIG. 4, a zero-power device receives a carrier signal sent by a network device, modulates the carrier signal, loads information to be sent, and radiates a modulated signal via an antenna. This procedure of information transmission is referred to as backscattering communication. Backscattering is closely related to load modulation. In load modulation, a circuit parameter(s) of an oscillation circuit of a zero-power device is adjusted and controlled according to the clock of a data stream, so that the magnitude and other parameters of the impedance of the zero-power device are changed accordingly, thus completing modulation. The load modulation technology mainly includes two schemes: resistance-based load modulation and capacitor-based load modulation. For resistance-based load modulation, a resistor is connected in parallel to a load, and the resistor is turned on or turned off under the control of a binary data stream, as illustrated in FIG. 5. The on and off of the resistor leads to change in circuit voltage to achieve amplitude-shift keying (ASK) modulation, i.e., signal modulation and transmission is achieved by adjusting the magnitude of a backscattered signal of a zero-power device. Similarly, for capacitor-based load modulation, change in resonant frequency of a circuit can be achieved through the on and off of a capacitor, to achieve frequency-shift keying (FSK) modulation, i.e., signal modulation and transmission is achieved by adjusting an operating frequency of a backscattered signal of a zero-power device.

As can be seen, a zero-power device performs information modulation on a carrier signal by means of load modulation, so as to achieve backscattering communication. Therefore, a zero-power device has the following significant advantages:

(1) There is no need to actively transmit a signal, and therefore, a complex RF circuit, such as a power amplifier (PA), an RF filter, etc., is not required;
(2) There is no need to actively generate a high-frequency signal, and therefore, a high-frequency crystal oscillator is not required;
(3) By means of backscattering communication, a terminal does not need to consume energy of the terminal itself to transmit a signal.

3. Coding technology

In data transmitted by a zero-power device, binaries "1" and "0" can be expressed in different forms of codes. In an RFID system, one of the following coding methods are usually applied: non-return to zero (NRZ) coding, Manchester coding, unipolar return to zero (RZ) coding, differential bi-phase (DBP) coding, differential coding, pulse interval coding (PIE), bi-phase space coding (FM0), miller encoding, or differential coding. In general, in different coding technologies, different pulse signals are applied to express 0 and 1.

In some scenarios, a zero-power device can be classified into the following types based on power sources and usage.

1. Passive zero-power device

For a zero-power device (for example, a tag in an RFID system), a built-in battery is not needed. When a zero-power device moves close to a network device (e.g. a reader in the RFID system), the zero-power device is within a near-field of antenna radiation of the network device. In this case, an antenna of the zero-power device generates an induced current through electromagnetic induction. The induced current drives a low-power chip circuit of the zero-power device to perform demodulation of a forward-link signal and modulation of a reverse-link (also referred to as backscatter-link) signal. For the backscatter link, the zero-power device performs signal transmission through backscattering.

It can be seen that, the passive zero-power device does not need a built-in battery to drive either the forward link or the reverse link, and therefore is truly a zero-power device.

The passive zero-power device does not need a battery and has a simple RF circuit and a simple baseband circuit. For example, the passive zero-power device does not need components such as a low-noise amplifier (LNA), a PA, a crystal oscillator, an analog-to-digital converter (ADC), and the like, and thus has advantages such as small size, light weight, low price, and long service life.

The passive zero-power device can also support other manners for energy collection, and obtain energy of a drive circuit by collecting energy from the environment (for example, light energy, thermal energy, kinetic energy, mechanical energy, and the like), to support communication of a terminal device.

2. Semi-passive zero-power device

A semi-passive zero-power device is not equipped with a conventional battery, but can use an RF power harvesting module to harvest radio wave energy or using the power harvesting module to harvest energy from the environment (such as solar energy, thermal energy, and mechanical vibration energy), and store the harvested energy in a power storage unit (e.g., a capacitor). After the power storage unit obtains energy, a low-power chip circuit of the zero-power device can be driven to perform demodulation of a forward-link signal and modulation of a reverse-link signal. For a backscatter link, the zero-power device performs signal transmission through backscattering. Alternatively, the zero-power device can use a low-power transmitter to perform active transmission-based communication based on the harvested energy.

It can be seen that, a semi-passive zero-power device does not need a built-in battery to drive either the forward link or the reverse link. Although the passive zero-power device utilizes energy stored in a capacitor during operation, since the energy comes from radio wave energy harvested by the power harvesting module, the passive zero-power device is truly a zero-power device.

The semi-passive zero-power device inherits many advantages of a passive zero-power device, and thus has advantages such as small size, light weight, low price, and long service life.

3. Active zero-power device

A zero-power device applied in some scenarios can also be referred to as an active zero-power device, and such device can have a built-in battery. The battery is used to drive a low-power chip circuit of the zero-power device to perform demodulation of a forward-link signal and modulation of a reverse-link signal. However, for a backscatter link, the zero-power device performs signal transmission through backscattering. Therefore, the zero-power consumption of such device mainly lies in that signal transmission on the reverse link does not require power of the terminal itself but is based on backscattering.

The built-in battery of the active zero-power terminal powers an RFID circuit to increase a reading and writing range of the active zero-power terminal, thereby improving reliability of communication. Therefore, the active zero-power terminal can be applied in some scenarios in which there are high requirements on communication distance, reading delay, and other aspects.

In some scenarios, the zero-power device can be classified into the following types based on the type of transmitter.

1) Backscatter-based zero-power device

Such zero-power device performs uplink data transmission through backscattering. The zero-power device does not have an active transmitter for active transmission, but has only a backscattering transmitter. Therefore, if data transmission is to be performed, the zero-power device needs to be provided with a carrier wave by the network device, and then performs backscattering based on the carrier wave, thereby implementing data transmission.

2. Active transmitter-based zero-power device

Such zero-power device performs uplink data transmission by using an active transmitter capable of active transmission. Therefore, when performing data transmission, the zero-power device can transmit data by using the active transmitter of the zero-power device itself without requiring the network device to provide a carrier wave. An active transmitter applicable to the zero-power device can be, for example, an ultra-low-power ASK transmitter, an ultra-low-power FSK transmitter, or the like. For the case of transmitting a signal of 100 microwatts ($\mu$w), overall power consumption can be reduced to 400~600$\mu$w.

3) Zero-power device having both backscattering transmitter and active transmitter

Such zero-power device can support both a backscattering transmitter and an active transmitter. The zero-power device can determine, according to different conditions (such as electric quantity and available ambient power source) or based on scheduling by a network device, which signal transmission scheme is to be applied, that is, whether to use an active transmitter or use a backscattering transmitter to perform signal transmission.

With vigorous development of IoT, existing IoT communication technology can no longer satisfy requirements of IoT communication in many scenarios, for example:

1. Demanding communication environment

Some IoT scenarios (for example, ultra-high voltage substations, train track monitoring in high-speed movement, environmental monitoring in extremely cold regions, industrial production lines, etc.) may face extreme environment such as high temperature, extremely low temperature, high humidity, high pressure, high radiation, or high-speed movement. In these scenarios, an existing IoT terminal cannot work due to limitation of working environment of a conventional power supply. In addition, extreme working environment is not conducive to maintenance of the IoT, such as battery replacement.

2. Requirement for extremely small size of terminal

For some IoT communication scenarios, such as food retrospective, commodity circulation, intelligent wearable, and the like, a terminal is required to have extremely small size to facilitate application in these scenarios. For example, an IoT terminal used for commodity management during circulation is usually embedded into a commodity package in a very small size in the form of electronic label. For another example, a lightweight wearable device can improve user experience while satisfying user requirements.

3. Requirement for extremely low cost of IoT communication

Numerous IoT communication scenarios require the cost of an IoT terminal to be low enough, thereby improving competitiveness compared with other alternative technologies. For example, in a logistics or warehousing scenario, in order to facilitate management of a large number of articles which are under circulation, an IoT terminal can be attached to each article, thereby completing precise management of a whole procedure and a whole cycle of logistics through communication between the terminal and a logistics network. These scenarios require sufficient competitiveness in the price of the IoT terminal.

Therefore, in order to satisfy these requirements of IoT communication that are not yet met, in a cellular network, it is also necessary to conduct research and development on an IoT that has ultra-low cost and extremely small size and is battery-free/maintenance-free. A zero-power IoT can just meet such requirements.

The zero-power IoT can also be referred to as an ambient power-enabled (AMP) IoT (ambient IoT). The zero-power device can also be referred to as an ambient IoT device or an AMP IoT device. The ambient IoT device can refer to an IoT device that utilizes various ambient energy, such as RF energy, light energy, solar energy, thermal energy, and mechanical energy. Such device may have no energy storage capability, or may have very limited energy storage capability, such as use of a capacitor with a capacity of tens of microfarads ($\mu$F).

The ambient IoT can be at least used in the following four types of scenarios:

1. Object recognition, such as logistics, management of products in a product line, and management of a supply chain;
2. Environmental monitoring, such as monitoring of working environment, temperature and humidity of natural environment, and toxic gas;
3. Positioning, such as indoor positioning, intelligent object search, and positioning of products in a product line;
4. Intelligent control, such as intelligent control of various electrical appliances (switching-on and switching-off of an air conditioner and temperature adjustment) in smart home, and intelligent control of various facilities (automatic pouring and fertilization) in an agricultural greenhouse.

II. Cellular passive IoT

With wider application of the 5th-generation (5G) in industry, there are more and more types and application scenarios of connections, and therefore higher requirements are imposed on the cost and power consumption of a communication terminal. The application of a passive IoT device that is battery-free and low-cost becomes a key technology for a cellular IoT, which enriches the types and the number of terminals connected to a 5G network, thereby truly realizing universal interconnection. The passive IoT device can be based on zero-power communication technology, such as RFID technology, and is extended on such basis so as to be applicable to a cellular IoT.

In order to facilitate understanding of embodiments of the disclosure, a power-supply signal, a scheduling signal, and a carrier signal involved in zero-power communication are described.

1. Power-supply signal

The power-supply signal is an energy source for energy collection of the zero-power device.

With regard to a carrier of the power-supply signal, the carrier can be a base station, a smart phone, an intelligent gateway, a charging station, a micro base station, etc.

With regard to the frequency band, the frequency band of a radio wave for power supply can be a low frequency, an intermediate frequency, a high frequency, or the like.

With regard to the waveform, a radio wave for power supply can be a sine wave, a square wave, a triangular wave, a pulse, a rectangular wave, or the like.

In addition, the power-supply signal can be a continuous wave, or can be a discontinuous wave (i. e. time interruption is allowed).

Optionally, the power-supply signal can be an existing signal in the 3rd-generation partnership project (3GPP) standard, such as a sounding reference signal (SRS), a physical uplink shared channel (PUSCH), a physical random access channel (PRACH), a physical uplink control channel (PUCCH), a physical downlink control channel (PDCCH), a physical downlink shared channel (PDSCH), a physical broadcast channel (PBCH), etc.; or can be a WiFi signal or a Bluetooth signal.

Optionally, the power-supply signal can also be implemented by a new signal, for example, a new signal dedicated to power supply.

2. Trigger signal (or referred to as scheduling signal)

The trigger signal is used to trigger or schedule the zero-power device to perform data transmission.

With regard to a carrier of the trigger signal, the carrier can be a base station, a smart phone, an intelligent gateway, etc.

With regard to the frequency band, a radio wave for triggering or scheduling can be a low frequency, an intermediate frequency, a high frequency, or the like.

With regard to the waveform, a radio wave for triggering or scheduling can be a sine wave, a square wave, a triangular wave, a pulse, a rectangular wave, or the like.

In addition, the trigger signal can be a continuous wave, or can be a discontinuous wave (i. e. time interruption is allowed).

Optionally, the trigger signal can be an existing signal in the 3GPP standard, such as an SRS, a PUSCH, a PRACH, a PUCCH, a PDCCH, a PDSCH, a PBCH; or can be a WIFI signal or a Bluetooth signal.

Optionally, the trigger signal can be implemented by a new signal, for example, a new signal dedicated to triggering or scheduling.

3. Carrier signal

The carrier signal is used for the zero-power device to generate a backscattered signal. For example, the zero-power device can modulate a received carrier signal according to information to be sent, so as to form the backscattered signal.

With regard to a carrier of the carrier signal, the carrier can be a base station, a smart phone, an intelligent gateway, etc.

With regard to the frequency band, a radio wave acting as a carrier signal can be a low frequency, an intermediate frequency, a high frequency, or the like.

With regard to the waveform, a radio wave acting as a carrier signal can be a sine wave, a square wave, a triangular wave, a pulse, a rectangular wave, or the like.

In addition, the carrier signal can be a continuous wave, or can be a discontinuous wave (i. e. time interruption is allowed).

Optionally, the carrier signal can be an existing signal in the 3GPP standard, such as an SRS, a PUSCH, a PRACH, a PUCCH, a PDCCH, a PDSCH, a PBCH; or can be a WiFi signal or a Bluetooth signal, etc.

Optionally, the carrier signal can be implemented by a new signal, for example, a new carrier signal dedicated to generating a backscattered signal.

It should be noted that, in embodiments of the disclosure, the power-supply signal, the scheduling signal, and the carrier signal can be the same signal, or can be different signals. For example, the power-supply signal can be used as a carrier signal, and the scheduling signal can also be used as a carrier signal.

In an NR system, a terminal device can enter a radio resource control (RRC)_CONNECTED state from an RRC_IDLE state or an RRC_INACTIVE state through a random access procedure. The NR system supports a 4-step random access procedure and a 2-step random access procedure. FIG. 6 is a schematic flowchart illustrating two types of 4-step random access procedures and two types of 2-step random access procedures, where FIG. 6(a) is a flowchart illustrating contention-based 4-step random access, FIG. 6(b) is a flowchart illustrating contention-based 2-step random access, FIG. 6(c) is a flowchart illustrating contention-free 4-step random access, and FIG. 6(d) is a flowchart illustrating contention-free 2-step random access.

Before performing the random access procedure illustrated in FIG. 6, the terminal device needs to receive system information to obtain a random access configuration for the terminal-device side, for example, obtain a transmission parameter for a PRACH via system information block 1 (SIB1).

By receiving a system message, the terminal device can obtain a transmission resource configuration for a PRACH and a preamble sequence-related parameter.

For example, during preamble transmission in a 4-step random access procedure, the terminal device calculates a random access radio network temporary identifier (RA-RNTI) of the terminal device according to the following formula:

$$\text{RA-RNTI} = 1 + s\_id + 14 \times t\_id + 14 \times 80 \times f\_id + 14 \times 80 \times 8 \times ul\_carrier\_id$$

The RA-RNTI is used for identifying message 2 (Msg2), i. e. a random access response (RAR), and the RA-RNTI is associated with a PRACH occasion for the terminal device to send a preamble.

During preamble transmission in a 2-step random access procedure, the terminal device calculates a message B-RNTI (MSGB-RNTI) of the terminal device according to the following formula:

$$\text{MSGB-RNTI} = 1 + s\_id + 14 \times t\_id + 14 \times 80 \times f\_id + 14 \times 80 \times 8 \times ul\_carrier\_id + 14 \times 80 \times 8 \times 2$$

The MSGB-RNTI is used for identifying MsgB, and the MSGB-RNTI is associated with a PRACH occasion for the terminal device to send a preamble.

$s\_id$ is an index of a 1st orthogonal frequency-division multiplexing (OFDM) symbol of a specified PRACH; $t\_id$ is an index of a 1st slot of the specified PRACH in a system frame; $f\_id$ is an index of the specified PRACH in frequency domain; and $ul\_carrier\_id$ is an uplink carrier used for message 1 (Msg1, that is, preamble) transmission.

In embodiments of the disclosure, the zero-power device is also referred to as an AMP device (or ambient device), an AMP IoT device (or ambient IoT device), or a zero-power terminal.

The zero-power device can realize large-density and large-scale deployment at a relatively low cost. In addition, due to advantages such as maintenance-free and battery-free, the zero-power device has great potential for application in industrial sensing networks, smart home, smart agriculture, logistics and warehousing, smart wearing, healthcare, and the like. The zero-power device can be combined with a sensor to perform environmental monitoring, danger warning, alarm, and the like.

Considering service characteristics, limitation of capability, limitation of working power consumption, and the like of the zero-power device itself, a conventional random access method cannot satisfy requirements of the zero-power device, and therefore, a random access method for the zero-power device needs to be designed.

In order to facilitate understanding of technical solutions of embodiments of the disclosure, the technical solutions of the disclosure are described in detail below with reference to embodiments. The above related art as an optional scheme can be arbitrarily combined with the technical solutions of embodiments of the disclosure, which shall all belong to the protection scope of embodiments of the disclosure. Embodiments of the disclosure include at least some of the following.

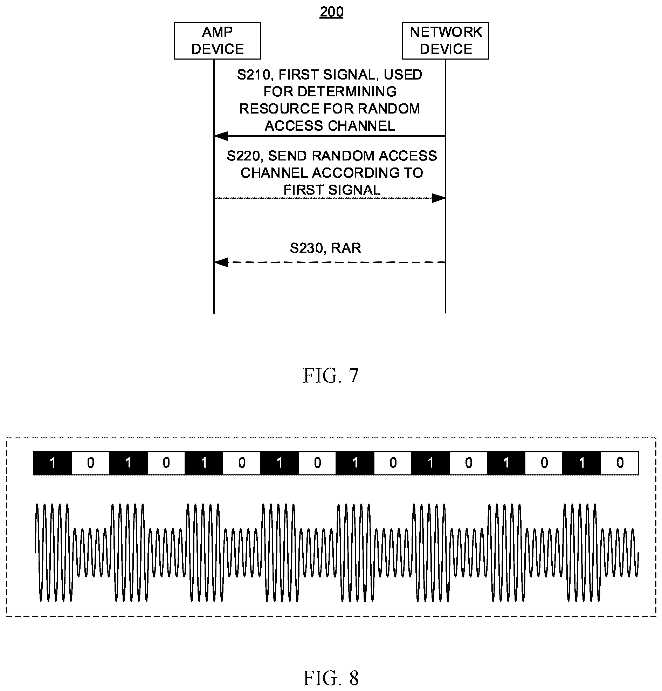

FIG. 7 is a schematic diagram of a wireless communication method 200 according to embodiments of the disclosure. As illustrated in FIG. 7, the method 200 includes at least some of the following.

S210, an AMP device receives a first signal sent by a network device, where the first signal is used for determining a resource for a random access channel.

S220, the AMP device sends the random access channel to the network device according to the first signal.

In embodiments of the disclosure, the random access channel can be replaced by a random access signal.

In embodiments of the disclosure, the random access channel can be replaced by a data signal.

In embodiments of the disclosure, the random access channel can be replaced by a data channel.

For example, the AMP device can receive the first signal sent by the network device, where the first signal is used for determining a resource for a data channel. The AMP device can send the data channel to the network device according to the first signal.

In some embodiments, the network device can be a base station in a cellular communication system, for example, a gNB in an NR system; or can be an AP in a WiFi system, which is not limited in the disclosure.

That is, the random access method provided in embodiments of the disclosure can be applied to random access and/or data transmission of the AMP device in an NR system or a WiFi system.

In embodiments of the disclosure, the AMP device can also be referred to as an AMP IoT device (or ambient IoT device), a zero-power device, or a zero-power terminal.

In some embodiments, the AMP device can be a type of device defined based on characteristics of the device such as complexity, energy source, communication mode, and waveform applied.

For example, the AMP device can be a device for performing communication based on ambient energy, for example, the AMP device obtains energy for communication by utilizing RF energy, light energy, solar energy, thermal energy, mechanical energy, or other ambient energy.

For another example, the AMP device can be a type of device with low complexity or applying new waveform, for example, performing communication with a low-order modulation scheme or a simple waveform or a signal with smaller bandwidth.

For another example, the AMP device can be a type of device to which backscattering communication is applied.

In some embodiments, the AMP devices can also support active transmission-based communication.

In some embodiments, the random access channel can be transmitted through backscattering or active transmission.

It should be understood that, in the disclosure, there is no limitation on the reason for which the AMP device initiates random access. For example, the AMP device can actively initiate random access, or can passively initiate random access. For example, if the AMP device needs to send data to the network device (for example, when the AMP device performs environmental monitoring and needs to report measured environmental data periodically or aperiodically), or when the network device initiates paging or communication scheduling to the AMP device and thus the AMP device needs to perform data transmission, the method provided in embodiments of the disclosure can be applied to perform random access and/or data transmission.

In some embodiments, the first signal can be considered as used for triggering transmission of the random access channel, in other words, the first signal is a trigger signal for the random access channel. That is, the AMP device can transmit the random access channel if the first signal is received, where the resource for the random access channel can be determined according to the first signal.

In some embodiments, the first signal can be referred to as an anchor signal or a reference signal if the first signal can be used for determining the resource for the random access channel.

In some embodiments, the first signal can be a specific sequence. The AMP device can determine, according to the specific sequence, that the first signal is an anchor signal. For example, the first signal can be a sequence with a fixed pattern where 0 and 1 are alternated, as illustrated in FIG. 8.

In some embodiments, the first signal further indicates a function of the random access channel.

For example, the function of the random access channel indicated by the first signal includes at least one of: used for random access only, used for data transmission only, or used for random access and data transmission.

In some embodiments, a sequence applied to the first signal or information carried in the first signal is associated with the function of the random access channel.

In some implementations, different candidate sequences are associated with different functions of the random access channel. For example, there are multiple candidate sequences, which include a first candidate sequence, a second candidate sequence, and a third candidate sequence. A random access channel associated with the first candidate sequence can be used for performing a random access procedure only (in other words, capable of terminal identification only) but does not support data transmission, a random access channel associated with the second candidate sequence supports random access and data transmission, and a random access channel associated with the third candidate sequence is used only for data transmission of the AMP device. In this case, if the first signal applies the first candidate sequence, it indicates that the random access channel is only used for random access but does not support data transmission; and if the first signal applies the second candidate sequence, it indicates that the random access channel is used for random access and data transmission.

In other implementations, the first signal carries indication information, where the indication information indicates the function of the random access channel.

In some embodiments of the disclosure, the first signal is further used for the AMP device to perform clock synchronization. For example, the first signal contains clock synchronization information, such as a clock synchronization sequence, and the AMP device can perform clock synchronization by detecting the clock synchronization sequence.

In some embodiments, the clock synchronization sequence can further be used for determining the resource for the random access channel, e. g., if the sequence is detected by the AMP device, the associated resource for the random access channel can be determined according to the sequence.

In other embodiments of the disclosure, the AMP device can perform clock synchronization according to a second signal. For example, the second signal can contain clock synchronization information, such as a clock synchronization sequence, and the AMP device can perform clock synchronization by detecting the clock synchronization sequence.

In embodiments of the disclosure, a signal used for clock synchronization is also referred to as a synchronization signal. An anchor signal and a synchronization signal can be the same signal, or can be different signals. That is, the first signal can be used as an anchor signal, or can be used as both an anchor signal and a synchronization signal.

In some embodiments, each first signal is associated with one random access channel, or multiple first signals are associated with one random access channel. For example, if the first signal is used as an anchor signal, each first signal is associated with one random access channel. If the first signal is used as a synchronization signal, each first signal is associated with one random access channel; or multiple first signals are associated with one random access channel, in which case there may be multiple first signals overlapped with the random access channel, and clock synchronization can be maintained based on multiple first signals during random access.

In some embodiments, each second signal is associated with one random access channel, or multiple second signals are associated with one random access channel. That is, the AMP device can perform clock synchronization based on one synchronization signal, or can perform clock synchronization based on multiple synchronization signals. If the AMP device performs clock synchronization based on multiple synchronization signals, there may be multiple synchronization signals overlapped with the random access channel, and clock synchronization can be maintained based on multiple synchronization signals during random access.

In some embodiments, the first signal can be an existing signal in a communication system, for example, a function for determining the resource for the random access channel can be added to the existing signal. Alternatively, the first signal can be a newly defined signal, for example, a newly defined signal for determining the resource for the random access channel.

In some embodiments, the first signal can be a paging signal, a scheduling signal, or another downlink signal sent by the network device. For example, if the network device needs to page the AMP device, the network device can send a paging signal, where the paging signal is used for determining the resource for the random access channel. For another example, when the network device schedules the AMP device to perform data transmission, the network device can send a scheduling signal, where the scheduling signal is used for determining the resource for the random access channel.

In some embodiments, the first signal can be generated by applying a low-order modulation scheme, or the first signal can be a simple waveform.

In some embodiments, the first signal can be obtained through amplitude modulation, such as on-off keying (OOK), i. e. the waveform of the first signal can be an OOK waveform. For example, based on an OOK waveform, the first signal can be generated by applying a specific coding method (for example, NRZ or Manchester). Alternatively, the first signal can be generated through FSK modulation or phase shift keying (PSK) modulation.

In some embodiments, the second signal can be an existing signal in a communication system, e. g., an existing signal is used for clock synchronization of the AMP device. Alternatively, the second signal can be a newly defined signal, e. g., a newly defined signal is used for clock synchronization of the AMP device.

In some embodiments, the second signal can be a paging signal or a scheduling signal.

In some embodiments, the second signal can be generated by applying a low-order modulation scheme, or the second signal can be a simple waveform.

In some embodiments, the second signal can be obtained through amplitude modulation, such as OOK, i. e. the waveform of the second signal can be an OOK waveform. For example, based on an OOK waveform, the second signal can be generated by applying a specific coding method (for example, NRZ or Manchester). Alternatively, the second signal can be generated through FSK modulation or PSK modulation.

In some embodiments of the disclosure, the length of a basic time unit for communication of the AMP device or the length of a basic time unit of the random access channel can be pre-defined, or configured by the network device, for example, configured via the first signal or the second signal. That is, the first signal or the second signal can be used for determining the length of the basic time unit for communication of the AMP device or the length of the basic time unit of the random access channel.

In some implementations, the network device can directly indicate the length value of the basic time unit.

In other implementations, the network device can indicate a target basic time unit length in multiple candidate basic time unit lengths, where each candidate basic time unit length corresponds to one index, and the network device can indicate an index of the target candidate basic time unit length. The multiple candidate basic time unit lengths can be pre-defined, or configured by the network device in advance. Optionally, the multiple candidate basic time unit lengths can be included in a random access configuration.

In other implementations, the network device can indicate an index of a target random access configuration in multiple random access configurations, where each random access configuration corresponds to one index, and the random access configuration includes a configuration of the length of the basic time unit for communication of the AMP device or a configuration of the length of the basic time unit of the random access channel.

In other implementations, the first signal can be a specific sequence, and the length of the basic time unit for communication of the AMP device or the length of the basic time unit of the random access channel can be determined according to the length of a time unit applied to the specific sequence.

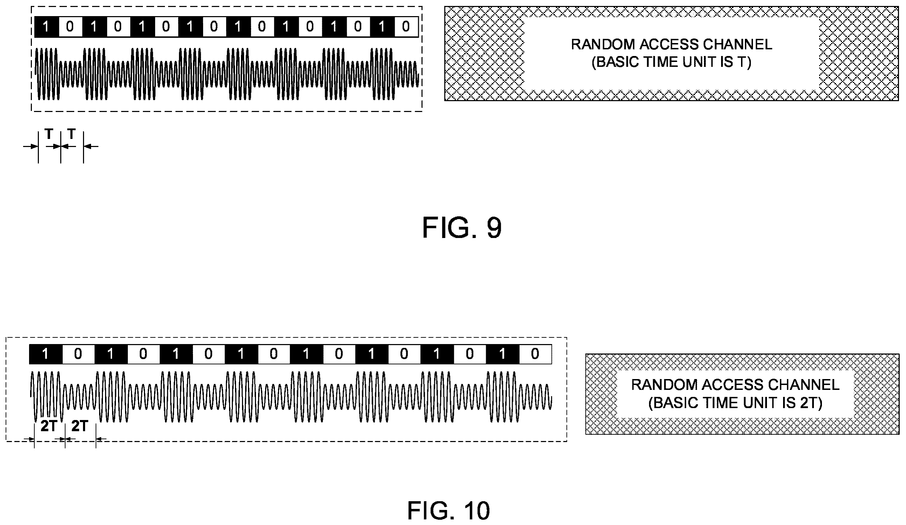

As an example, as illustrated in FIG. 9, if a sequence in the first signal is transmitted by applying a basic time unit having a time length of $T$, the terminal device uses $T$ as the length of the basic time unit when initiating random access or data transmission.

As another example, as illustrated in FIG. 10, if a sequence in the first signal is transmitted by applying a basic time unit having a time length of $2T$, the terminal device uses $2T$ as the length of the basic time unit when initiating random access or data transmission.

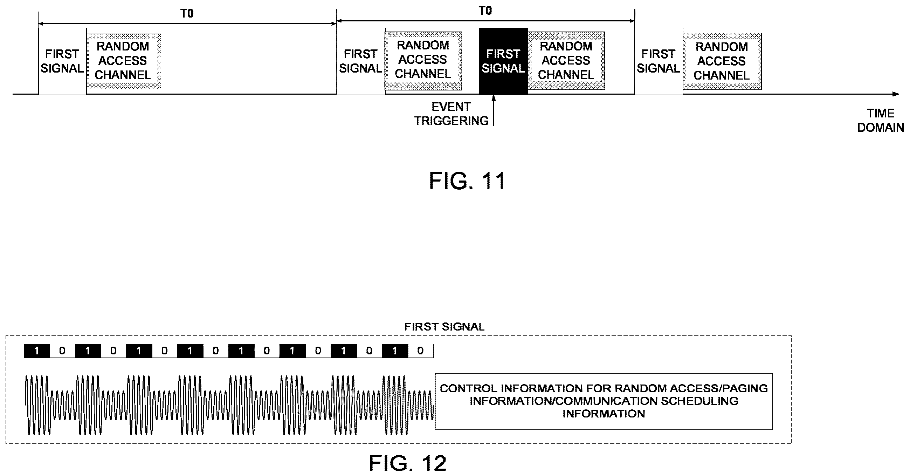

In some embodiments of the disclosure, the first signal can be sent periodically, or can be sent based on event triggering, as illustrated in FIG. 11.

For example, if the first signal is used as a synchronization signal, the network device can periodically send the first signal, to provide clock synchronization information required for random access of the AMP device in a communication system, so that the synchronization signal can be detected when the AMP device needs to perform random access.

For another example, the network device can send the first signal if the network device needs to page or schedule the AMP device.

In some embodiments, the lengths of the basic time units adopted by the network device when transmitting the first signals in different time periods can be the same, or can be different. For example, if the network device needs to be accessed by more AMP devices in a first time period, a smaller length of the basic time unit can be applied, or if the network device needs to be accessed by fewer AMP devices in a second time period, a larger length of the basic time unit can be applied.

In some embodiments of the disclosure, the second signal can be sent periodically, or can be sent based on event triggering.

For example, the network device can periodically send the second signal to provide clock synchronization information required for random access of the AMP device in a communication system, so that the synchronization signal can be detected when the AMP device needs to perform random access.

For another example, the network device can send the second signal if the network device needs to page or schedule the AMP device.

In some embodiments, the lengths of the basic time units adopted by the network device when transmitting the second signals in different time periods can be the same, or can be different. For example, if the network device needs to be accessed by more AMP devices in a first time period, a smaller length of the basic time unit can be applied, or if the network device needs to be accessed by fewer AMP devices in a second time period, a larger length of the basic time unit can be applied.

In some embodiments of the disclosure, the first signal can carry control information for random access, for example, a candidate preamble set, function indication information of random access, a random access configuration, etc., as illustrated in FIG. 12. Optionally, the function indication information of random access indicates whether random access supports data transmission, that is, whether the random access channel supports data transmission.

In some embodiments of the disclosure, the first signal can carry paging information or scheduling information. For example, if the first signal is the same signal as a paging signal or a scheduling signal, the first signal can carry paging information or scheduling information, as illustrated in FIG. 12.

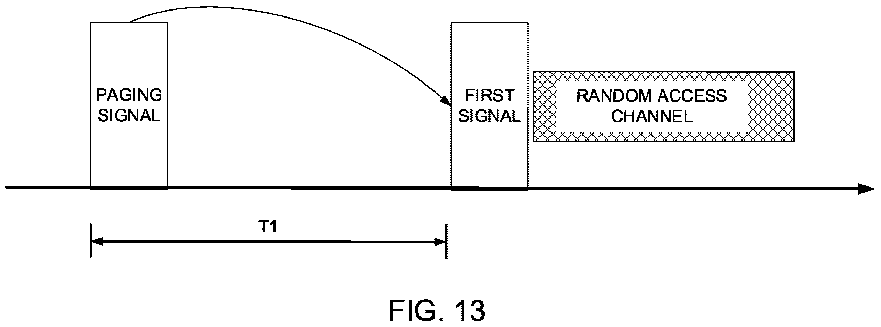

In some embodiments of the disclosure, the network device can indicate a position of the first signal via a third signal, where the third signal can be a paging signal, a scheduling signal, or another signal. Optionally, there can be a certain time interval between the third signal and the first signal. FIG. 13 is an exemplary diagram illustrating indicating the location of the first signal via a paging signal.

Optionally, the time interval can be pre-defined, or configured by the network device (e. g., configured dynamically, or configured semi-statically).

In some implementations, the network device configures the specific value of the time interval via the third signal.

In other implementations, the network device can indicate an index of a target time interval in multiple time intervals, where each time interval corresponds to one index, and the network device can indicate the index of the target time interval. Optionally, the multiple time intervals can be pre-defined, or can be configured by the network device in advance. Optionally, the multiple time intervals can be included in a random access configuration.

In other implementations, the network device can indicate an index of a target random access configuration in multiple random access configurations, where each random access configuration corresponds to one index, and the random access configuration includes a configuration of a time interval between the first signal and the third signal.

In some embodiments of the disclosure, the first signal can be used for determining the resource for the random access channel as follows. A resource for the first signal is used for determining the resource for the random access channel, for example, there is an association between the resource for the first signal and the resource for the random access channel.

In other embodiments of the disclosure, the first signal can be used for determining the resource for the random access channel as follows. Information carried in the first signal is used for determining the resource for the random access channel, for example, the first signal carries information of a resource for sending the random access channel.

In other words, the AMP device can determine the resource for the random access channel according to the resource for the first signal or the information carried in the first signal.

In some embodiments, the resource for the random access channel can include a time-domain resource and/or a frequency-domain resource for the random access channel.

In some embodiments of the disclosure, the first signal can be used for determining the resource for the random access channel as follows. The first signal is used for determining a starting position and/or a time length of the resource for the random access channel.

For example, there is an association between the starting position of the resource for the random access channel and the resource for the first signal.

For example, the starting position of the resource for the random access channel is adjacent to an ending position of the resource for the first signal.

Exemplarily, there is a first time interval between the starting position of the resource for the random access channel and the resource for the first signal.

In some embodiments, the first time interval can be referenced to a starting position or an ending position of the first signal. For example, with reference to a time unit where the starting position or the ending position of the first signal is located, the time unit can be a first time unit, a second time unit, or a third time unit. The first time unit is a basic time unit for communication of the AMP device, the length of the second time unit is equal to the length of multiple first time units, and the length of the third time unit is equal to the length of multiple second time units.

In some embodiments, the unit of the first time interval can be the first time unit, or the second time unit, or the third time unit.

Exemplarily, the first time unit can be an OFDM symbol, the second time unit can be a slot or a sub-frame, and the third time unit can be a frame.

In some implementations, the first time interval is determined according to one time offset, or determined according to multiple time offsets, where the multiple time offsets correspond to different time unit lengths.

For example, the starting position of the resource for the random access channel is determined according to a time unit where the starting position or the ending position of the resource for the first signal is located and the first time interval. The time unit where the starting position or the ending position of the resource for the first signal is located is the first time unit, and the unit of the first time interval is the first time unit. Alternatively, the time unit where the starting position or the ending position of the resource for the first signal is located is the second time unit, and the unit of the first time interval is the second time unit. Alternatively, the time unit where the starting position or the ending position of the resource for the first signal is located is the third time unit, and the unit of the first time interval is the third time unit.

Optionally, the first time interval can be pre-defined, or configured by the network device, for example, configured dynamically or configured semi-statically.

In some implementations, the network device configures the specific value of the first time interval via the first signal.

In other implementations, the network device can indicate an index of a target time interval in multiple time intervals. For example, each time interval in the multiple time intervals corresponds to one index, and the network device can indicate the index of the target time interval. Optionally, the multiple time intervals can be pre-defined, or configured by the network device in advance. Optionally, the multiple time intervals can be included in a random access configuration.

In other implementations, the network device can indicate an index of a target random access configuration in multiple random access configurations, where each random access configuration corresponds to one index, and the random access configuration includes a configuration of a time interval between the random access channel and the first signal.

In some embodiments, the time length of the resource for the random access channel can be pre-defined, or configured by the network device, e. g., configured dynamically or configured semi-statically.

In some embodiments, the time length of the resource for the random access channel can be the first time unit, or the second time unit, or the third time unit.

In some implementations, the network device configures the specific value of the time length via the first signal.

In other implementations, the network device can indicate an index of a target time length in multiple time lengths. For example, each time length corresponds to one index, and the network device can indicate the index of the target time length. Optionally, the multiple time lengths can be pre-defined, or configured by the network device in advance. Optionally, the multiple time lengths can be included in a random access configuration.

In other implementations, the network device can also indicate an index of a target random access configuration in multiple random access configurations, where each random access configuration corresponds to one index, and the random access configuration includes a configuration of the time length of the resource for the random access channel.

In some embodiments of the disclosure, the first signal is used for determining a time-domain resource window used for random access. For example, the first information is used for determining a starting position and/or a length of the time-domain resource window.

In some embodiments, the first signal is adjacent to the starting position of the time-domain resource window.

For example, an ending position of the first signal is adjacent to the starting position of the time-domain resource window.

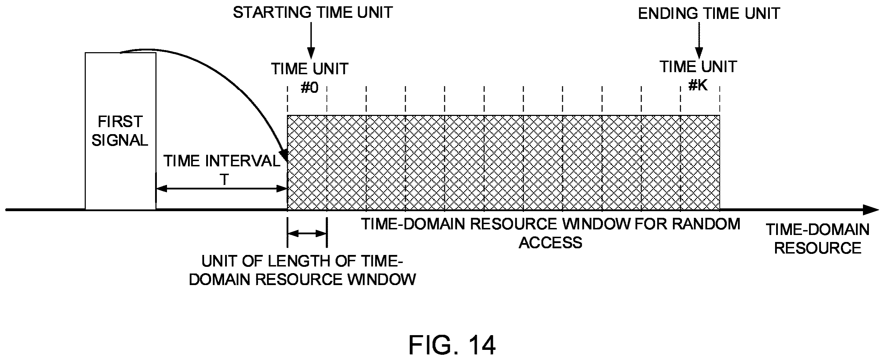

In other embodiments, there is a time interval (denoted as a second time interval) between the first signal and the starting position of the time-domain resource window, as illustrated in FIG. 14.

Exemplarily, the second time interval is pre-defined, for example, the second time interval is a fixed value.

Exemplarily, the second time interval is configured by the network device, for example, configured semi-statically or configured dynamically.

For example, the second time interval can be configured via the first signal or the second signal, or can be configured via another signal.

In some embodiments, the unit of the second time interval is a first time unit, a second time unit, or a third time unit, where the first time unit is a basic time unit for communication of the AMP device, the length of the second time unit is equal to the length of multiple first time units, and the length of the third time unit is equal to the length of multiple second time units.

Exemplarily, the first time unit can be an OFDM symbol, the second time unit can be a slot or a sub-frame, and the third time unit can be a frame.

In some embodiments, the second time interval can be referenced to a starting position or an ending position of the first signal. For example, with reference to a time unit where the starting position or the ending position of the first signal is located, the time unit can be the first time unit, the second time unit, or the third time unit.

In some implementations, the second time interval is determined according to one time offset, or determined according to multiple time offsets, where the multiple time offsets correspond to different time unit lengths.

That is, the starting position of the time-domain resource window can be determined according to the position of the first signal and one time offset, or determined according to the position of the first signal and multiple time offsets.

In some implementations, the starting position of the time-domain resource window is determined according to a first time offset and a second time offset, for example, determined according to the position of the first signal as well as the first time offset and the second time offset. The unit of the first time offset is the second time unit, and the unit of the second time offset is the third time unit, the second time offset is used for determining a target third time unit corresponding to the starting position of the time-domain resource window, and the first time offset is used for determining a target second time unit corresponding to the starting position of the time-domain resource window in the target third time unit. The position of the first signal can be a third time unit where the starting position or the ending position of the first signal is located. In this implementation, the second time interval is determined according to the first time offset and the second time offset.

In other implementations, the starting position of the time-domain resource window is determined according to a third time offset and a fourth time offset, for example, determined according to the position of the first signal as well as the third time offset and the fourth time offset. The unit of the third time offset is the first time unit, the unit of the fourth time offset is the second time unit, the fourth time offset is used for determining a target second time unit corresponding to the starting position of the time-domain resource window, and the third time offset is used for determining a target first time unit corresponding to the starting position of the time-domain resource window in the target second time unit. The position of the first signal can be a second time unit where the starting position or the ending position of the first signal is located. In this implementation, the second time interval is determined according to the third time offset and the fourth time offset.

In other implementations, the starting position of the time-domain resource window is determined according to a fifth time offset and a sixth time offset, for example, determined according to the position of the first signal as well as the fifth time offset and the sixth time offset. The unit of the fifth time offset is the first time unit, the unit of the sixth time offset is the third time unit, the sixth time offset is used for determining a target third time unit corresponding to the starting position of the time-domain resource window, a fifth time offset is used for determining a target first time unit corresponding to the starting position of the time-domain resource window in the target third time unit. The position of the first signal can be a third time unit where the starting position or the ending position of the first signal is located. In this implementation, the second time interval is determined according to the fifth time offset and the sixth time offset.

In other implementations, the starting position of the time-domain resource window is determined according to the position of the first signal and a seventh time offset. For example, a position obtained by offsetting the position of the first signal backward by the seventh time offset is taken as the starting position of the time-domain resource window. The unit of the seventh time offset can be the first time unit, and the position of the first signal can be a first time unit where the starting position or the ending position of the first signal is located. Alternatively, the unit of the seventh time offset can be the second time unit, and the position of the first signal can be a second time unit where the starting position or the ending position of the first signal is located. Alternatively, the unit of the seventh time offset can be the third time unit, and the position of the first signal can be a third time unit where the starting position or the ending position of the first signal is located.

In some embodiments, the length of the time-domain resource window is pre-defined. For example, the length can be a fixed value.

In other embodiments, the length of the time-domain resource window is configured by the network device, e. g., configured semi-statically or configured dynamically. Specifically, for example, the length of the time-domain resource window can be configured via the first signal or the second signal, or can be configured via another signal.

In some implementations, the network device can directly configure the length value of the time-domain resource window. Alternatively, the network device can indicate an index of a target length in multiple candidate lengths, where each candidate length corresponds to one index. Alternatively, the network device can indicate an index of a target random access configuration in multiple random access configurations, where each random access configuration corresponds to one index, and the random access configuration includes a configuration of the length of the time-domain resource window.

In some embodiments, the unit of the length of the time-domain resource window is a first time unit, a second time unit, or a third time unit, where the first time unit is a basic time unit for communication of the AMP device, the length of the second time unit is equal to the length of multiple first time units, and the length of the third time unit is equal to the length of multiple second time units.

In some embodiments, the AMP device can start sending the random access channel only at a starting position of a time unit in the time-domain resource window. That is, the random access channel can be sent starting from the starting position of the time unit in the time-domain resource window.

Optionally, the time unit is the first time unit, the second time unit, or the third time unit.

For example, the AMP device can start sending the random access channel at a starting position of the first time unit in the time-domain resource window.

For another example, the AMP device can start sending the random access channel at a starting position of the second time unit in the time-domain resource window.

For another example, the AMP device can start sending the random access channel at a starting position of the third time unit in the time-domain resource window.

In some embodiments, the AMP device can start sending the random access channel in an $M^{th}$ time unit in the time-domain resource window, where $M$ is a positive integer.

In some implementations, $M$ is determined by the AMP device. For example, the $M^{th}$ time unit is randomly selected by the AMP device. Specifically, for example, the AMP device can determine the $M^{th}$ time unit from $K$ time units based on an ALOHA algorithm or ALOHA-like algorithm, where $K$ is the number of time units that can be used for sending the random access channel in the time-domain resource window, and $1 \leq M \leq K$.

In other implementations, $M$ can be configured by the network device. For example, the network device can configure for each AMP device a target time unit for sending the random access channel.

For example, each of the $K$ time units in the time-domain resource window corresponds to one index, for example, $1 \sim K$. The network device can indicate $M$ among $1 \sim K$. After receiving the configuration, the AMP device can start sending the random access channel in the $M^{th}$ time unit in the time-domain resource window.

For another example, the network device can indicate a time interval between the target time unit and the first signal.

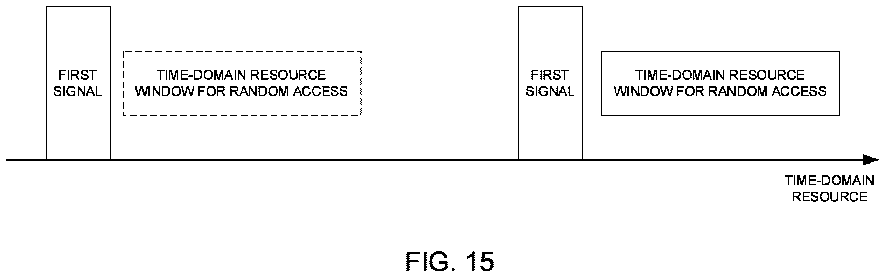

In some embodiments, as illustrated in FIG. 15, each first signal is associated with one time-domain resource window, or no time-domain resource window is associated with each first signal. That is, after each first signal, the network device allocates a time-domain resource for random access, or no time-domain resource for random access is allocated. Optionally, when sending the first signal, the network device can indicate whether the time-domain resource for random access is allocated after the first signal.

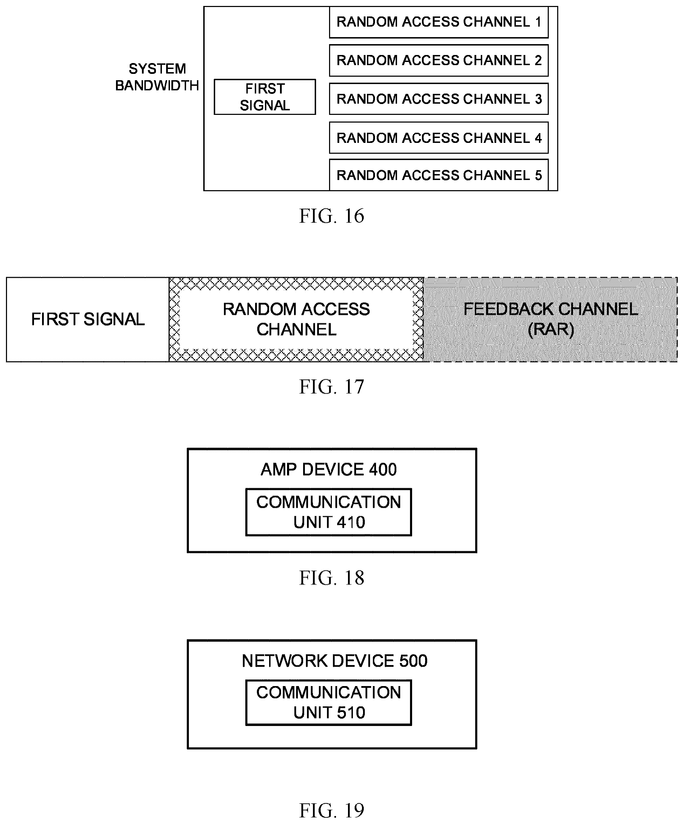

In some embodiments, as illustrated in FIG. 16, the first signal and the random access channel are same in frequency, or there is a frequency offset between the first signal and the random access channel.

Optionally, when sending the random access channel, the AMP device can send the random access channel by using the same frequency-domain resource as that of the first signal, or send the random access channel by using a different frequency-domain resource from that of the first signal.

Optionally, "the random access channel uses the same frequency-domain resource as that of the first signal" can mean that the random access channel uses a frequency-domain resource that is completely the same as that of the first signal, for example, the bandwidths are the same, and the center frequencies are aligned; or mean that the center frequency of the frequency-domain resource for the random access channel is aligned with the center frequency of the frequency-domain resource for the first signal, but the bandwidth of the frequency-domain resource for the random access channel is larger than the bandwidth of the frequency-domain resource for the first signal.

In some embodiments, the frequency offset can be pre-defined, for example, the frequency offset can be a fixed value.

In other embodiments, the frequency offset can be configured by the network device, for example, configured dynamically or configured semi-statically.

In some specific examples, the network device configures a specific value of the frequency offset via the first signal.

In other specific examples, the network device can indicate an index of a target frequency offset in multiple frequency offsets. For example, each frequency offset in the multiple frequency offsets corresponds to one index, and the network device can indicate the index of the target frequency offset. Optionally, the multiple frequency offsets can be pre-defined or configured by the network device in advance. Optionally, the multiple frequency offsets can be included in a random access configuration.

In another specific example, the network device can indicate an index of a target random access configuration in multiple random access configurations, where each random access configuration corresponds to one index, and the random access configuration includes a configuration of a frequency offset between the random access channel and the first signal.

In some embodiments, the AMP device can determine the time-domain resource for random access based on a random access resource configuration and a system time-domain resource number (e. g., a system frame number (SFN)). For example, the AMP device obtains an SFN according to a signal sent by the network device, so as to obtain a system timing, and then determines, based on the random access resource configuration from the network device as well as the SFN, a system frame where the time-domain resource for random access exists.

In some embodiments of the disclosure, the random access channel contains at least one of: a preamble sequence, identity information of the AMP device, information of data to be transmitted by the AMP device, information of structure or type of the random access channel, association information between resources for different fields in the random access channel, or time-domain position information of an RAR associated with the random access channel.

In some embodiments, the random access channel can include at least one field for carrying at least one of: a preamble sequence, identity information of the AMP device, information of data to be transmitted by the AMP device, information of structure or type of the random access channel, association information between resources for different fields in the random access channel, or time-domain position information of an RAR associated with the random access channel.

In some implementations, the preamble sequence can be selected by the AMP device from multiple candidate preamble sequences. For example, the AMP device can select one preamble sequence randomly from multiple candidate preamble sequences, or can select one preamble sequence from multiple candidate preamble sequences according to an identity (ID) of the AMP device.

In some embodiments, the information of structure or type of the random access channel indicates fields included in the random access channel, for example, indicates whether the random access channel includes a field used for carrying data information.

In some embodiments, the identity information of the AMP device is used for the network device to identify the AMP device sending random access channel.

In some embodiments, the identity information of the AMP device can be information for identifying the AMP device in a communication system.

In some embodiments, the identity information of the AMP device can be at least one of: a terminal identity of the AMP device, for example, a temporary identity allocated by the network device such as a temporary mobile subscriber identity (TMSI) or an RNTI; position information of the AMP device in a communication system, for example, position coordinates of the AMP device; a device ID of the AMP device in a communication system, for example, a device ID or number (that is, index) allocated to the AMP device by the network device in a deployed system; or a sequence ID selected by the AMP device from a preset sequence resource pool during communication.

In some embodiments, the identity information of the AMP device can be ID information generated according to at least two of the following: a terminal identity of the AMP device, for example, a temporary identity allocated by the network device, such as a TMSI or an RNTI; position information of the AMP device in a communication system, for example, position coordinates of the AMP device; a device ID of the AMP device in a communication system; and a sequence ID selected by the AMP device from a preset sequence resource pool during communication.

In some embodiments, the preamble sequence is related to the structure or type or function of the random access channel.

In some embodiments, the structure of the random access channel can be one of: including only a field related to random access (for example, containing only identity information of the AMP device), including only a field related to data transmission, or including a field related to random access and a field related to data transmission.

In some embodiments, the type of the random access channel can be one of: a random access channel used for random access only, a random access channel used for data transmission only, or a random access channel used for random access and data transmission.

In some embodiments, the structure of the random access channel can be one of: used for random access only, used for data transmission only, or used for random access and data transmission.

In some embodiments, random access channels of different structures or types or functions are associated with different candidate preamble sets.

For example, a random access channel of a first structure or a first type or a first function is associated with a first candidate preamble set, a random access channel of a second structure or a second type or a second function is associated with a second candidate preamble set, and a random access channel of a second structure or a second type or a second function is associated with a third candidate preamble set.

Optionally, a random access channel of the first structure or the first type or the first function can be a random access channel used for random access only, a random access channel of the second structure or of the second type or the second function can be a random access channel used for data transmission only, and a random access channel of the third structure or the third type or the third function can be a random access channel used for random access and data transmission.

In this case, if the random access channel is used for random access only (for example, containing only identity information of the AMP device), a preamble sequence in the first candidate preamble sequence is applied. Alternatively, if the random access channel needs to contain data information, a preamble sequence in the third candidate preamble set can be applied.

In some embodiments, if the network device schedules the AMP device to perform data transmission or the AMP device actively initiates data transmission, the random access channel can contain the information of data to be transmitted by the AMP device.

In some embodiments, information of association between resources for different fields in the random access channel includes, but is not limited to, at least one of: an association between a time-domain resource and/or frequency-domain resource for the preamble sequence in the random access channel and a time-domain resource and/or frequency-domain resource for the identity information in the random access channel; an association between a time-domain resource and/or frequency-domain resource for the data information in the random access channel and a time-domain resource and/or frequency-domain resource for the preamble sequence in the random access channel; or an association between a time-domain resource and/or frequency-domain resource for the data information in the random access channel and a time-domain resource and/or frequency-domain resource for the identity information in the random access channel.

Therefore, the network device can decode the random access channel according to the association, to obtain information carried on the random access channel.

In some embodiments, the time-domain position information of the RAR associated with the random access channel can be time-domain position information of an RAR expected by the AMP device. The time-domain position information can be a specific time-domain resource position, or can be a time interval between the RAR and the random access channel. By indicating to the network device the time-domain position of the RAR expected by the AMP device, the AMP device can retransmit promptly the random access channel.

In some embodiments of the disclosure, as illustrated in FIG. 7, the method 200 further includes the following.

S230, the AMP device receives an RAR from the network device.

In some embodiments, the RAR is determined according to at least one of: a position of the preamble sequence, for example, a time-domain position and/or a frequency domain position of the preamble sequence; identity information of the AMP device; for the implementation thereof, reference can be made to related elaborations in the foregoing embodiments; position information of the AMP device, for example, position coordinates of the AMP device; data information sent by the AMP device, for example, the data information can be a feature bit in the data information, or a cyclic redundancy check (CRC) bit in the data information; or scheduling information for the AMP device from the network device.

In some embodiments, retransmission of the random access channel can be performed if the AMP device has not received an RAR matching the AMP device itself.

FIG. 17 is a schematic structural diagram illustrating a random access channel provided in embodiments of the disclosure. As illustrated in FIG. 17, before random access, the AMP device can firstly receive the first signal, and determine the resource for the random access channel according to the first signal. Optionally, the first signal further contains clock synchronization information. If the first signal does not contain clock synchronization information, the AMP device can further receive a second signal, where the second signal contains clock synchronization information, and then the AMP device performs clock synchronization according to the second signal.

In some embodiments, the first signal can further contain control information for random access, such as a candidate preamble set, a function of random access, a random access configuration, etc.

In some embodiments, the first signal can further contain paging information or scheduling information. For example, if the first signal is multiplexed with a paging signal or a scheduling signal, the first signal can contain paging information or scheduling information.

Further, the AMP device can receive from the network device a feedback or response regarding the random access channel, for example, an RAR.

As can be seen, in embodiments of the disclosure, the AMP device determines the resource for the random access channel according to the first signal from the network device, for example, determines a time-domain resource window for random access according to the first signal, and then the AMP device sends the random access channel in the time-domain resource window.

For example, if a paging signal or a scheduling signal from network device is received, the AMP device can determine the time-domain resource window for random access according to the first signal and a random access configuration, and as such, a time-domain resource can be determined without reference to an SFN.

Therefore, the random access method provided in embodiments of the disclosure can be considered to be an event-triggered random access method. If the network device requires the AMP device to perform data transmission, the network device can quickly and simply trigger the AMP device to perform random access, which is more flexible and more suitable for service characteristics of the AMP device.

The method embodiments of the disclosure are described in detail above with reference to FIG. 7 to FIG. 17, and the apparatus embodiments of the disclosure will be described in detail below with reference to FIG. 18 to FIG. 22. It should be understood that, the apparatus embodiments and the method embodiments correspond to each other, and for similar content, reference can be made to the method embodiments.

FIG. 18 is a schematic block diagram of an AMP device 400 according to embodiments of the disclosure. As illustrated in FIG. 38, the AMP device 400 includes a communication unit 410. The communication unit 410 is configured to: receive a first signal sent by a network device, where the first signal is used for determining a resource for a random access channel; and send the random access channel to the network device according to the first signal.

In some embodiments, the first signal is further used for determining a length of a basic time unit used for communication of the AMP device.

In some embodiments, the first signal is used for determining a time-domain resource window used for random access.

In some embodiments, the first signal is adjacent to a starting position of the time-domain resource window.

In some embodiments, there is a time interval between the first signal and a starting position of the time-domain resource window.

In some embodiments, the time interval is pre-defined, or configured by the network device.

In some embodiments, the time interval is configured via the first signal.

In some embodiments, a unit of the time interval is a first time unit, a second time unit, or a third time unit, where the first time unit is a basic time unit for communication of the AMP device, a length of the second time unit is equal to a length of multiple first time units, and a length of the third time unit is equal to a length of multiple second time units.

In some embodiments, the starting position of the time-domain resource window is determined according to a first time offset and a second time offset, where a unit of the first time offset is the second time unit, a unit of the second time offset is the third time unit, the second time offset is used for determining a target third time unit corresponding to the starting position of the time-domain resource window, and the first time offset is used for determining a target second time unit corresponding to the starting position of the time-domain resource window in the target third time unit.

In some embodiments, a length of the time-domain resource window is pre-defined, or configured by the network device.

In some embodiments, the length of the time-domain resource window is configured via the first signal.

In some embodiments, a unit of the length of the time-domain resource window is a first time unit, a second time unit, or a third time unit, where the first time unit is a basic time unit for communication of the AMP device, a length of the second time unit is equal to a length of multiple first time units, and a length of the third time unit is equal to a length of multiple second time units.

In some embodiments, the random access channel is sent from a starting position of a time unit in the time-domain resource window.

In some embodiments, the time unit is a first time unit, a second time unit, or a third time unit, where the first time unit is a basic time unit for communication of the AMP device, a length of the second time unit is equal to a length of multiple first time units, and a length of the third time unit is equal to a length of multiple second time units.

In some embodiments, the time unit is an $M^{th}$ time unit in the time-domain resource window, where $M$ is determined by the AMP device or configured by the network device, $M \leq K$, $K$ is the total number of time units in the time-domain resource window, and $M$ is a positive integer.

In some embodiments, the first signal and the random access channel are same in frequency.

In some embodiments, there is a frequency offset between the first signal and the random access channel.

In some embodiments, the first signal is further used for indicating a function of the random access channel.

In some embodiments, the function of the random access channel includes at least one of: used for random access only, used for data transmission only, or used for random access and data transmission.

In some embodiments, a sequence applied to the first signal or information carried in the first signal is associated with the function of the random access channel.

In some embodiments, each first signal is associated with one random access channel, or multiple first signals are associated with one random access channel.

In some embodiments, the first signal is sent periodically or is sent based on event triggering.

In some embodiments, the first signal is a paging signal or a scheduling signal.

In some embodiments, the first signal contains clock synchronization information.

In some embodiments, the communication unit 410 is further configured to receive a second signal sent by the network device, where the second signal contains clock synchronization information.

In some embodiments, each second signal is associated with one random access channel, or multiple second signals are associated with one random access channel.

In some embodiments, the second signal is further used for determining a length of a basic time unit for communication of the AMP device.

In some embodiments, the random access channel contains at least one of the following information: a preamble sequence, identity information of the AMP device, information of data to be transmitted by the AMP device, information of structure or type of the random access channel, association information between resources for different fields in the random access channel, or time-domain position information of an RAR associated with the random access channel.

In some embodiments, the information of structure or type of the random access channel includes whether the random access channel has data information to be transmitted.

In some embodiments, the association information between resources for different fields in the random access channel includes at least one of: an association between a time-domain resource and/or frequency-domain resource for the preamble sequence in the random access channel and a time-domain resource and/or frequency-domain resource for the identity information in the random access channel; an association between a time-domain resource and/or frequency-domain resource for the data information in the random access channel and a time-domain resource and/or frequency-domain resource for the preamble sequence in the random access channel; or an association between a time-domain resource and/or frequency-domain resource for the data information in the random access channel and a time-domain resource and/or frequency-domain resource for the identity information in the random access channel.

In some embodiments, the preamble sequence is related to the structure or type of the random access channel.

In some embodiments, the random access channel is a random access channel of a first structure or a first type, and the preamble sequence is selected from a first candidate preamble set, where the first candidate preamble set corresponds to a random access channel of the first structure or the first type, the first candidate preamble set is one of multiple candidate preamble sets, and each of the multiple candidate preamble sets is associated with a random access channel of one structure or type.

In some embodiments, the communication unit 410 is further configured to receive an RAR from the network device.

In some embodiments, the RAR is determined according to at least one of: a position of the preamble sequence, the identity information of the AMP device, position information of the AMP device, data information sent by the AMP device, or scheduling information for the AMP device from the network device.

Optionally, in some embodiments, the communication unit can be a communication interface or a transceiver, or an input/output interface of a communication chip or a system on a chip (SOC). The processing unit can be one or more processors.

It should be understood that, the AMP device 400 according to embodiments of the disclosure can correspond to the AMP device in the method embodiments of the disclosure, and the foregoing and other operations and/or functions of various units in the AMP device 400 are respectively intended for implementing corresponding procedures of the AMP devices in the method illustrated in FIG. 7 to FIG. 17, which are not described herein again for brevity.

FIG. 19 is a schematic block diagram of a network device 500 according to embodiments of the disclosure. As illustrated in FIG. 19, the network device 500 includes: a communication unit 510 configured to: send a first signal to an AMP device, where the first signal is used for determining a resource for a random access channel; and receive, according to the first signal, the random access channel sent by the AMP device.

In some embodiments, the first signal is further used for determining a length of a basic time unit used for communication of the AMP device.

In some embodiments, the first signal is used for determining a time-domain resource window used for random access.

In some embodiments, the first signal is adjacent to a starting position of the time-domain resource window.

In some embodiments, there is a time interval between the first signal and a starting position of the time-domain resource window.

In some embodiments, he time interval is pre-defined, or configured by the network device.

In some embodiments, the time interval is configured via the first signal.

In some embodiments, a unit of the time interval is a first time unit, a second time unit, or a third time unit, where the first time unit is a basic time unit for communication of the AMP device, a length of the second time unit is equal to a length of multiple first time units, and a length of the third time unit is equal to a length of multiple second time units.

In some embodiments, the starting position of the time-domain resource window is determined according to a first time offset and a second time offset, where a unit of the first time offset is the second time unit, a unit of the second time offset is the third time unit, the second time offset is used for determining a target third time unit corresponding to the starting position of the time-domain resource window, and the first time offset is used for determining a target second time unit corresponding to the starting position of the time-domain resource window in the target third time unit.

In some embodiments, a length of the time-domain resource window is pre-defined, or configured by the network device.

In some embodiments, the length of the time-domain resource window is configured via the first signal.

In some embodiments, a unit of the length of the time-domain resource window is a first time unit, a second time unit, or a third time unit, where the first time unit is a basic time unit for communication of the AMP device, a length of the second time unit is equal to a length of multiple first time units, and a length of the third time unit is equal to a length of multiple second time units.

In some embodiments, the random access channel is sent from a starting position of a time unit in the time-domain resource window.

In some embodiments, the time unit is a first time unit, a second time unit, or a third time unit, where the first time unit is a basic time unit for communication of the AMP device, a length of the second time unit is equal to a length of multiple first time units, and a length of the third time unit is equal to a length of multiple second time units.

In some embodiments, the time unit is an $M^{th}$ time unit in the time-domain resource window, where $M$ is determined by the AMP device or configured by the network device, $M \leq K$, $K$ is the total number of time units in the time-domain resource window, and $M$ is a positive integer.

In some embodiments, the first signal and the random access channel are same in frequency.

In some embodiments, there is a frequency offset between the first signal and the random access channel.

In some embodiments, the first signal is further used for indicating a function of the random access channel.

In some embodiments, the function of the random access channel includes at least one of: used for random access only, used for data transmission only, or used for random access and data transmission.

In some embodiments, a sequence applied to the first signal or information carried in the first signal is associated with the function of the random access channel.

In some embodiments, each first signal is associated with one random access channel, or multiple first signals are associated with one random access channel.

In some embodiments, the first signal is sent periodically or is sent based on event triggering.

In some embodiments, the first signal is a paging signal or a scheduling signal.

In some embodiments, the first signal contains clock synchronization information.

In some embodiments, the communication unit 510 is further configured to send a second signal to the AMP device, where the second signal contains clock synchronization information.

In some embodiments, each second signal is associated with one random access channel, or multiple second signals are associated with one random access channel.

In some embodiments, the second signal is further used for determining a length of a basic time unit for communication of the AMP device.

In some embodiments, the random access channel contains at least one of the following information: a preamble sequence, identity information of the AMP device, information of data to be transmitted by the AMP device, information of structure or type of the random access channel, association information between resources for different fields in the random access channel, or time-domain position information of an RAR associated with the random access channel.

In some embodiments, the information of structure or type of the random access channel includes whether the random access channel has data information to be transmitted.

In some embodiments, the association information between resources for different fields in the random access channel includes at least one of: an association between a time-domain resource and/or frequency-domain resource for the preamble sequence in the random access channel and a time-domain resource and/or frequency-domain resource for the identity information in the random access channel; an association between a time-domain resource and/or frequency-domain resource for the data information in the random access channel and a time-domain resource and/or frequency-domain resource for the preamble sequence in the random access channel; or an association between a time-domain resource and/or frequency-domain resource for the data information in the random access channel and a time-domain resource and/or frequency-domain resource for the identity information in the random access channel.

In some embodiments, the preamble sequence is related to the structure or type of the random access channel.

In some embodiments, the random access channel is a random access channel of a first structure or a first type, and the preamble sequence is selected from a first candidate preamble set, where the first candidate preamble set corresponds to a random access channel of the first structure or the first type, the first candidate preamble set is one of multiple candidate preamble sets, and each of the multiple candidate preamble sets is associated with a random access channel of one structure or type.

In some embodiments, the communication unit 510 is further configured to send an RAR to the AMP device.

In some embodiments, the RAR is determined according to at least one of: a position of the preamble sequence, the identity information of the AMP device, position information of the AMP device, data information sent by the AMP device, or scheduling information for the AMP device from the network device.

Optionally, in some embodiments, the communication unit can be a communication interface or a transceiver, or an input/output interface of a communication chip or an SOC. The processing unit can be one or more processors.

It should be understood that, the network device 500 according to embodiments of the disclosure can correspond to the network device in the method embodiments of the disclosure, and the foregoing and other operations and/or functions of various units in the network device 500 are respectively intended to implement corresponding procedures of the network device in the method illustrated in FIG. 7 to FIG. 17, which are not described herein again for brevity.

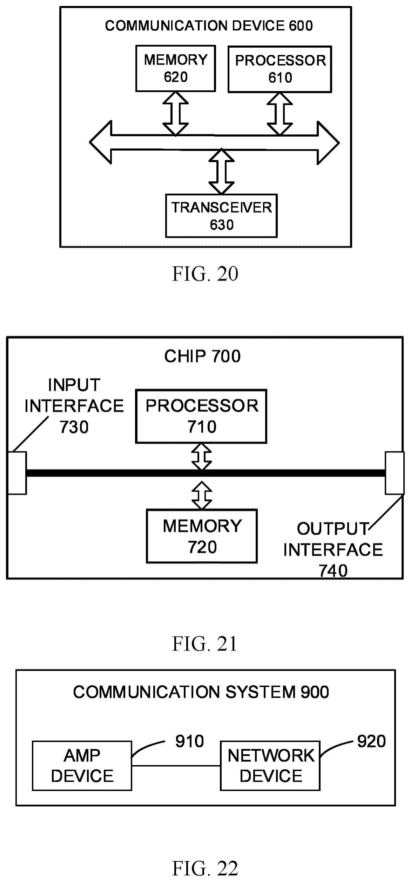

FIG. 20 is a schematic structural diagram of a communication device 600 provided in embodiments of the disclosure. The communication device 600 illustrated in FIG. 20 includes a processor 610. The processor 610 can invoke and execute computer programs stored in a memory, to implement the method in embodiments of the disclosure.

Optionally, as illustrated in FIG. 20, the communication device 600 may further include a memory 620, where the processor 610 can invoke and execute computer programs stored in the memory 620 to implement the method in embodiments of the disclosure.

The memory 620 may be a separate device independent of the processor 610, or may be integrated into the processor 610.

Optionally, as illustrated in FIG. 20, the communication device 600 may further include a transceiver 630. The processor 610 can control the transceiver 630 to communicate with other devices, and specifically, to send information or data to other devices or receive information or data sent by other devices.

The transceiver 630 may include a transmitter and a receiver. The transceiver 630 can further include an antenna, where one or more antennas may be provided.

Optionally, the communication device 600 may specifically be a network device in embodiments of the disclosure, and the communication device 600 may implement corresponding operations implemented by the network device in various methods in embodiments of the disclosure, which will not be described again herein for the sake of brevity.

Optionally, the communication device 600 may specifically be an AMP device in embodiments of the disclosure, and the communication device 600 may implement corresponding operations implemented by the AMP device in various methods in embodiments of the disclosure, which will not be described again herein for the sake of brevity.

FIG. 21 is a schematic structural diagram of a chip according to embodiments of the disclosure. The chip 700 illustrated in FIG. 21 includes a processor 710. The processor 710 can invoke and execute computer programs stored in a memory, so as to implement the method in embodiments of the disclosure.

Optionally, as illustrated in FIG. 21, the chip 700 may further include a memory 720. The processor 710 can invoke and execute computer programs stored in the memory 720, so as to implement the method in embodiments of the disclosure.

The memory 720 may be a separate device independent of the processor 710, or may be integrated into the processor 710.

Optionally, the chip 700 may further include an input interface 730. The processor 710 can control the input interface 730 to communicate with other devices or chips, and specifically, to obtain information or data sent by other devices or chips.

Optionally, the chip 700 may further include an output interface 740. The processor 710 can control the output interface 740 to communicate with other devices or chips, and specifically, to output information or data to other devices or chips.

Optionally, the chip may be applied to the network device in embodiments of the disclosure, and the chip may implement corresponding operations implemented by the network device in various methods in embodiments of the disclosure, which will not be described again herein for the sake of brevity.

Optionally, the chip may be applied to the mobile terminal / terminal device in embodiments of the disclosure, and the chip may implement corresponding operations implemented by the mobile terminal / terminal device in various methods in embodiments of the disclosure, which will not be described again herein for the sake of brevity.

Optionally, the chip in embodiments of the disclosure may also be an SOC.

FIG. 22 is a schematic block diagram of a communication system 900 provided in embodiments of the disclosure. As illustrated in FIG. 22, the communication system 900 includes an AMP device 910 and a network device 920.

The AMP device 910 can be configured to implement corresponding functions implemented by the AMP device in the foregoing method, and the network device 920 can be configured to implement corresponding functions implemented by the network device in the foregoing method, which are not described herein again for the sake of brevity.

It should be understood that, the processor in embodiments of the disclosure may be an integrated circuit chip with signal processing capabilities. During implementation, each step of the foregoing method embodiments may be completed by an integrated logic circuit of hardware in the processor or an instruction in the form of software. The processor may be a general-purpose processor, a digital signal processor (DSP), an application specific integrated circuit (ASIC), a field programmable gate array (FPGA), or other programmable logic devices, discrete gates or transistor logic devices, discrete hardware components. The methods, steps, and logic blocks disclosed in embodiments of the disclosure can be implemented or executed. The general-purpose processor may be a microprocessor, or the processor may be any conventional processor or the like. The steps of the method disclosed in embodiments of the disclosure may be directly implemented by a hardware decoding processor, or may be performed by hardware and software modules in the decoding processor. The software module can be located in a storage medium such as a random access memory (RAM), a flash memory, a read only memory (ROM), a programmable ROM (PROM), or an electrically erasable programmable memory, registers, and the like. The storage medium is located in the memory. The processor reads the information in the memory, and completes the steps of the method described above with the hardware thereof.

It can be understood that, the memory in embodiments of the disclosure may be a volatile memory or a non-volatile memory, or may include both the volatile memory and the non-volatile memory. The non-volatile memory may be a ROM, a PROM, an erasable PROM (EPROM), an electrically EPROM (EEPROM), or flash memory. The volatile memory can be a RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It should be noted that, the memory of the systems and methods described in the disclosure is intended to include, but is not limited to, these and any other suitable types of memory.

It should be understood that, the memory above is intended for illustration rather than limitation. For example, the memory in embodiments of the disclosure may also be an SRAM, a DRAM, an SDRAM, a DDR SDRAM, an ESDRAM, an SLDRAM, a DR RAM, etc. In other words, the memory in embodiments of the disclosure is intended to include, but is not limited to, these and any other suitable types of memory.

Embodiments of the disclosure further provide a computer-readable storage medium. The computer-readable storage medium is configured to store computer programs.

Optionally, the computer-readable storage medium may be applied to the network device in embodiments of the disclosure, and the computer programs are operable with a computer to execute corresponding operations implemented by the network device in various methods in embodiments of the disclosure, which will not be described again herein for the sake of brevity.

Optionally, the computer-readable storage medium may be applied to an AMP device in embodiments of the disclosure, and the computer programs are operable with a computer to execute corresponding operations implemented by the AMP device in various methods in embodiments of the disclosure, which will not be described again herein for the sake of brevity.

Embodiments of the disclosure further provide a computer program product. The computer program product includes computer program instructions.

Optionally, the computer program product may be applied to the network device in embodiments of the disclosure, and the computer program instructions are operable with a computer to execute corresponding operations implemented by the network device in various methods in embodiments of the disclosure, which will not be described again herein for the sake of brevity.

Optionally, the computer program product may be applied to an AMP device in embodiments of the disclosure, and the computer program instructions are operable with a computer to execute corresponding operations implemented by the AMP device in various methods in embodiments of the disclosure, which will not be described again herein for the sake of brevity.

Embodiments of the disclosure further provide a computer program.

Optionally, the computer program may be applied to the network device in embodiments of the disclosure. The computer program, when executed by a computer, is operable to implement corresponding operations implemented by the network device in various methods in embodiments of the disclosure, which will not be described again herein for the sake of brevity.

Optionally, the computer program may be applied to an AMP device in embodiments of the disclosure. The computer program, when executed by a computer, is operable to implement corresponding operations implemented by the AMP device in various methods in embodiments of the disclosure, which will not be described again herein for the sake of brevity.

Those of ordinary skill in the art will appreciate that units and algorithmic operations of various examples described in connection with embodiments of the disclosure can be implemented by electronic hardware or by a combination of computer software and electronic hardware. Whether these functions are performed by means of hardware or software depends on the application and the design constraints of the associated technical solution. Those skilled in the art may use different methods with regard to each particular application to implement the described functionality, but such methods should not be regarded as lying beyond the scope of the disclosure

It will be evident to those skilled in the art that, for the sake of convenience and brevity, in terms of the specific working processes of the foregoing systems, apparatuses, and units, reference can be made to the corresponding processes in the foregoing method embodiments, which will not be repeated herein.

It will be appreciated that the systems, apparatuses, and methods disclosed in embodiments of the disclosure may also be implemented in various other manners. For example, the above apparatus embodiments are merely illustrative, e.g., the division of units is only a division of logical functions, and other manners of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device, or unit, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the disclosure.

In addition, various functional units described in various embodiments of the disclosure may be integrated into one processing unit or may be present as a number of physically separated units, and two or more units may be integrated into one.

If the functions are implemented as software functional units and sold or used as standalone products, they may be stored in a computer-readable storage medium. Based on such an understanding, the essential technical solution, or the portion that contributes to the prior art, or part of the technical solution of the disclosure may be embodied as software products. The computer software products can be stored in a storage medium and may include multiple instructions that, when executed, can cause a computer device, e.g., a personal computer, a server, a network device, etc., to execute some or all operations of the methods described in various embodiments of the disclosure. The above storage medium may include various kinds of media that can store program codes, such as a universal serial bus (USB) flash disk, a mobile hard drive, a ROM, a RAM, a magnetic disk, or an optical disk.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

**Claims**

1. A wireless communication method, comprising:

   receiving, an ambient power-enabled (AMP) device, a first signal sent by a network device, wherein the first signal is used for determining a resource for a random access channel; and
   sending, by the AMP device, the random access channel to the network device according to the first signal.

2. The method of claim 1, wherein the first signal is further used for determining a length of a basic time unit used for communication of the AMP device.

3. The method of claim 1 or 2, wherein the first signal is used for determining a time-domain resource window used for random access.

4. The method of claim 3, wherein the first signal is adjacent to a starting position of the time-domain resource window.

5. The method of claim 3, wherein there is a time interval between the first signal and a starting position of the time-domain resource window.

6. The method of claim 5, wherein the time interval is pre-defined, or configured by the network device.

7. The method of claim 6, wherein the time interval is configured via the first signal.

8. The method of any of claims 5 to 7, wherein a unit of the time interval is a first time unit, a second time unit, or a third time unit, wherein the first time unit is a basic time unit for communication of the AMP device, a length of the second time unit is equal to a length of a plurality of first time units, and a length of the third time unit is equal to a length of a plurality of second time units.

9. The method of claim 8, wherein the starting position of the time-domain resource window is determined according to a first time offset and a second time offset, wherein a unit of the first time offset is the second time unit, a unit of the second time offset is the third time unit, the second time offset is used for determining a target third time unit corresponding to the starting position of the time-domain resource window, and the first time offset is used for determining a target second time unit corresponding to the starting position of the time-domain resource window in the target third time unit.

10. The method of any of claims 3 to 9, wherein a length of the time-domain resource window is pre-defined, or configured by the network device.

11. The method of claim 10, wherein the length of the time-domain resource window is configured via the first signal.

12. The method of any of claims 3 to 11, wherein a unit of the length of the time-domain resource window is a first time unit, a second time unit, or a third time unit, wherein the first time unit is a basic time unit for communication of the AMP device, a length of the second time unit is equal to a length of a plurality of first time units, and a length of the third time unit is equal to a length of a plurality of second time units.

13. The method of any of claims 3 to 12, wherein the random access channel is sent from a starting position of a time unit in the time-domain resource window.

14. The method of claim 13, wherein the time unit is a first time unit, a second time unit, or a third time unit, wherein the first time unit is a basic time unit for communication of the AMP device, a length of the second time unit is equal to a length of a plurality of first time units, and a length of the third time unit is equal to a length of a plurality of second time units.

15. The method of claim 13 or 14, wherein the time unit is an $M^{th}$ time unit in the time-domain resource window, wherein $M$ is determined by the AMP device or configured by the network device, $M \le K$, $K$ is the total number of time units in the time-domain resource window, and $M$ is a positive integer.

16. The method of any of claims 1 to 15, wherein the first signal and the random access channel are same in frequency.

17. The method of any of claims 1 to 15, wherein there is a frequency offset between the first signal and the random access channel.

18. The method of any of claims 1 to 17, wherein the first signal is further used for indicating a function of the random access channel.

19. The method of claim 18, wherein the function of the random access channel comprises at least one of:
used for random access only, used for data transmission only, or used for random access and data transmission.

20. The method of claim 18 or 19, wherein a sequence applied to the first signal or information carried in the first signal is associated with the function of the random access channel.

21. The method of any of claims 1 to 20, wherein each first signal is associated with one random access channel, or a plurality of first signals are associated with one random access channel.

22. The method of any of claims 1 to 21, wherein the first signal is sent periodically or is sent based on event triggering.

23. The method of any of claims 1 to 22, wherein the first signal is a paging signal or a scheduling signal.

24. The method of any of claims 1 to 23, wherein the first signal contains clock synchronization information.

25. The method of any of claims 1 to 23, further comprising:
receiving, by the AMP device, a second signal sent by the network device, wherein the second signal contains clock synchronization information.

26. The method of claim 25, wherein each second signal is associated with one random access channel, or a plurality of second signals are associated with one random access channel.

27. The method of claim 25 or 26, wherein the second signal is further used for determining a length of a basic time unit for communication of the AMP device.

28. The method of any of claims 1 to 27, wherein the random access channel contains at least one of the following information:
a preamble sequence, identity information of the AMP device, information of data to be transmitted by the AMP device, information of structure or type of the random access channel, association information between resources for different fields in the random access channel, or time-domain position information of a random access response (RAR) associated with the random access channel.

29. The method of claim 28, wherein the information of structure or type of the random access channel comprises whether the random access channel has data information to be transmitted.

30. The method of claim 28 or 29, wherein the association information between resources for different fields in the random access channel comprises at least one of:

an association between a time-domain resource and/or frequency-domain resource for the preamble sequence in the random access channel and a time-domain resource and/or frequency-domain resource for the identity information in the random access channel;
an association between a time-domain resource and/or frequency-domain resource for the data information in the random access channel and a time-domain resource and/or frequency-domain resource for the preamble sequence in the random access channel; or
an association between a time-domain resource and/or frequency-domain resource for the data information in the random access channel and a time-domain resource and/or frequency-domain resource for the identity information in the random access channel.

31. The method of any of claims 28 to 30, wherein the preamble sequence is related to the structure or type of the random access channel.

32. The method of claim 31, wherein the random access channel is a random access channel of a first structure or a first type, and the preamble sequence is selected from a first candidate preamble set, wherein the first candidate preamble set corresponds to a random access channel of the first structure or the first type, the first candidate preamble set is one of a plurality of candidate preamble sets, and each of the plurality of candidate preamble sets is associated with a random access channel of one structure or type.

33. The method of any of claims 1 to 32, further comprising:
receiving, by the AMP device, an RAR from the network device.

34. The method of claim 33, wherein the RAR is determined according to at least one of:
a position of the preamble sequence, the identity information of the AMP device, position information of the AMP device, data information sent by the AMP device, or scheduling information for the AMP device from the network device.

35. A wireless communication method, comprising:

sending, by a network device, a first signal to an ambient power-enabled (AMP) device, wherein the first signal is used for determining a resource for a random access channel; and
receiving, according to the first signal, the random access channel sent by the AMP device.

36. The method of claim 35, wherein the first signal is further used for determining a length of a basic time unit used for communication of the AMP device.

37. The method of claim 35 or 36, wherein the first signal is used for determining a time-domain resource window used for random access.

38. The method of claim 37, wherein the first signal is adjacent to a starting position of the time-domain resource window.

39. The method of claim 37, wherein there is a time interval between the first signal and a starting position of the time-domain resource window.

40. The method of claim 39, wherein the time interval is pre-defined, or configured by the network device.

41. The method of claim 40, wherein the time interval is configured via the first signal.

42. The method of any of claims 39 to 41, wherein a unit of the time interval is a first time unit, a second time unit, or a third time unit, wherein the first time unit is a basic time unit for communication of the AMP device, a length of the second time unit is equal to a length of a plurality of first time units, and a length of the third time unit is equal to a length of a plurality of second time units.

43. The method of claim 42, wherein the starting position of the time-domain resource window is determined according to a first time offset and a second time offset, wherein a unit of the first time offset is the second time unit, a unit of the second time offset is the third time unit, the second time offset is used for determining a target third time unit corresponding to the starting position of the time-domain resource window, and the first time offset is used for determining a target second time unit corresponding to the starting position of the time-domain resource window in the target third time unit.

44. The method of any of claims 37 to 43, wherein a length of the time-domain resource window is pre-defined, or configured by the network device.

45. The method of claim 44, wherein the length of the time-domain resource window is configured via the first signal.

46. The method of any of claims 37 to 45, wherein a unit of the length of the time-domain resource window is a first time unit, a second time unit, or a third time unit, wherein the first time unit is a basic time unit for communication of the AMP device, a length of the second time unit is equal to a length of a plurality of first time units, and a length of the third time unit is equal to a length of a plurality of second time units.

47. The method of any of claims 37 to 46, wherein the random access channel is sent from a starting position of a time unit in the time-domain resource window.

48. The method of claim 47, wherein the time unit is a first time unit, a second time unit, or a third time unit, wherein the first time unit is a basic time unit for communication of the AMP device, a length of the second time unit is equal to a length of a plurality of first time units, and a length of the third time unit is equal to a length of a plurality of second time units.

49. The method of claim 47 or 48, wherein the time unit is an $M^{th}$ time unit in the time-domain resource window, wherein $M$ is determined by the AMP device or configured by the network device, $M \leq K$, $K$ is the total number of time units in the time-domain resource window, and $M$ is a positive integer.

50. The method of any of claims 35 to 49, wherein the first signal and the random access channel are same in frequency.

51. The method of any of claims 35 to 49, wherein there is a frequency offset between the first signal and the random access channel.

52. The method of any of claims 35 to 51, wherein the first signal is further used for indicating a function of the random access channel.

53. The method of claim 52, wherein the function of the random access channel comprises at least one of:
used for random access only, used for data transmission only, or used for random access and data transmission.

54. The method of claim 52 or 53, wherein a sequence applied to the first signal or information carried in the first signal is associated with the function of the random access channel.

55. The method according to any of claims 35 to 54, wherein each first signal is associated with one random access channel, or a plurality of first signals are associated with one random access channel.

56. The method of any of claims 35 to 55, wherein the first signal is sent periodically or is sent based on event triggering.

57. The method of any of claims 35 to 56, wherein the first signal is a paging signal or a scheduling signal.

58. The method of any of claims 35 to 57, wherein the first signal contains clock synchronization information.

59. The method of any of claims 35 to 57, further comprising:
sending, by the network device, a second signal to the AMP device, wherein the second signal contains time synchronization information.

60. The method of claim 59, wherein each second signal is associated with one random access channel, or a plurality of second signals are associated with one random access channel.

61. The method of claim 59 or 60, wherein the second signal is further used for determining a length of a basic time unit for communication of the AMP device.

**62.** The method of any of claims 35 to 61, wherein the random access channel contains at least one of the following information:
a preamble sequence, identity information of the AMP device, information of data to be transmitted of the AMP device, information of structure or type of the random access channel, association information between resources for different fields in the random access channel, or time-domain position information of a random access response (RAR) associated with the random access channel.

**63.** The method of claim 62, wherein the information of structure or type of the random access channel comprises whether the random access channel has data information to be transmitted.

**64.** The method of claim 62 or 63, wherein the association information between resources for different fields in the random access channel comprises at least one of:

an association between a time-domain resource and/or frequency-domain resource for the preamble sequence in the random access channel and a time-domain resource and/or frequency-domain resource for the identity information in the random access channel;
an association between a time-domain resource and/or frequency-domain resource for the data information in the random access channel and a time-domain resource and/or frequency-domain resource for the preamble sequence in the random access channel; or
an association between a time-domain resource and/or frequency-domain resource for the data information in the random access channel and a time-domain resource and/or frequency-domain resource for the identity information in the random access channel.

**65.** The method of any of claims 62 to 64, wherein the preamble sequence is related to the structure or type of the random access channel.

**66.** The method of claim 65, wherein the random access channel is a random access channel of a first structure or a first type, and the preamble sequence is selected from a first candidate preamble set, wherein the first candidate preamble set corresponds to a random access channel of the first structure or the first type, the first candidate preamble set is one of a plurality of candidate preamble sets, and each of the plurality of candidate preamble sets is associated with a random access channel of one structure or type.

**67.** The method of any of claims 35 to 66, further comprising:
sending, by the network device, an RAR to the AMP device.

**68.** The method of claim 67, wherein the RAR is determined according to at least one of:
a position of the preamble sequence, the identity information of the AMP device, position information of the AMP device, data information sent by the AMP device, or scheduling information for the AMP device from the network device.

**69.** An ambient power-enabled (AMP) device, comprising:
a communication unit configured to:

receive a first signal sent by a network device, wherein the first signal is used for determining a resource for a random access channel; and
send the random access channel to the network device according to the first signal.

**70.** A network device, comprising:
a communication unit configured to:

send a first signal to an ambient power-enabled (AMP) device, wherein the first signal is used for determining a resource for a random access channel; and
receive, according to the first signal, the random access channel sent by the AMP device.

**71.** An ambient power-enabled (AMP) device, comprising:

a memory configured to store computer programs; and
a processor configured to invoke and execute the computer programs stored in the memory, to perform the method of any of claims 1 to 34.

**72.** A network device, comprising:

a memory configured to store computer programs; and
a processor configured to invoke and execute the computer programs stored in the memory, to perform the method of any of claims 35 to 38.

**73.** A chip, comprising:

a processor configured to invoke and execute computer programs from a memory, to cause a device equipped with the chip to perform the method of any of claims 1 to 34 or the method of any of claims 35 to 68.

**74.** A computer-readable storage medium configured to store computer programs which are operable with a computer to perform the method of any of claims 1 to 34 or the method of any of claims 35 to 68.

**75.** A computer program product, comprising computer program instructions which are operable with a computer to perform the method of any of claims 1 to 34 or the method of any of claims 35 to 68.

**76.** A computer program, operable with a computer to perform the method of any of claims 1 to 34 or the method of any of claims 35 to 68.

**100**

FIG. 1

FIG. 2

FIG. 3

FIG. 4

FIG. 5

FIG. 6

200

| AMP DEVICE | | NETWORK DEVICE |

S210, FIRST SIGNAL, USED
FOR DETERMINING
RESOURCE FOR RANDOM
ACCESS CHANNEL

S220, SEND RANDOM ACCESS
CHANNEL ACCORDING TO
FIRST SIGNAL

S230, RAR

FIG. 7

| 1 | 0 | 1 | 0 | 1 | 0 | 1 | 0 | 1 | 0 | 1 | 0 | 1 | 0 | 1 | 0 |

FIG. 8

| 1 | 0 | 1 | 0 | 1 | 0 | 1 | 0 | 1 | 0 | 1 | 0 | 1 | 0 | 1 | 0 |

RANDOM ACCESS CHANNEL
(BASIC TIME UNIT IS T)

FIG. 9

| 1 | 0 | 1 | 0 | 1 | 0 | 1 | 0 | 1 | 0 | 1 | 0 | 1 | 0 | 1 | 0 |

RANDOM ACCESS CHANNEL
(BASIC TIME UNIT IS 2T)

FIG. 10

T0

T0

FIRST SIGNAL | RANDOM ACCESS CHANNEL | FIRST SIGNAL | RANDOM ACCESS CHANNEL | FIRST SIGNAL | RANDOM ACCESS CHANNEL | FIRST SIGNAL | RANDOM ACCESS CHANNEL

EVENT TRIGGERING

TIME DOMAIN

## FIG. 11

FIRST SIGNAL

| 1 | 0 | 1 | 0 | 1 | 0 | 1 | 0 | 1 | 0 | 1 | 0 | 1 | 0 | 1 | 0 |

CONTROL INFORMATION FOR RANDOM ACCESS/PAGING INFORMATION/COMMUNICATION SCHEDULING INFORMATION

## FIG. 12

FIG. 13

EP 4 676 140 A1

STARTING TIME UNIT

ENDING TIME UNIT

TIME UNIT
#0

TIME UNIT
#K

FIRST
SIGNAL

TIME INTERVAL
T

TIME-DOMAIN RESOURCE WINDOW FOR RANDOM
ACCESS

TIME-DOMAIN
RESOURCE

UNIT OF LENGTH OF TIME-
DOMAIN RESOURCE WINDOW

FIG. 14

FIG. 15

| SYSTEM BANDWIDTH | | RANDOM ACCESS CHANNEL 1 |
|---|---|---|
| | | RANDOM ACCESS CHANNEL 2 |
| | FIRST SIGNAL | RANDOM ACCESS CHANNEL 3 |
| | | RANDOM ACCESS CHANNEL 4 |
| | | RANDOM ACCESS CHANNEL 5 |

FIG. 16

| FIRST SIGNAL | RANDOM ACCESS CHANNEL | FEEDBACK CHANNEL (RAR) |
|---|---|---|

FIG. 17

AMP DEVICE 400

COMMUNICATION UNIT 410

FIG. 18

NETWORK DEVICE 500

COMMUNICATION UNIT 510

FIG. 19

COMMUNICATION DEVICE 600

MEMORY
620

PROCESSOR
610

TRANSCEIVER
630

FIG. 20

CHIP 700

INPUT
INTERFACE
730

PROCESSOR
710

MEMORY
720

OUTPUT
INTERFACE
740

FIG. 21

COMMUNICATION SYSTEM 900

AMP
DEVICE

910

NETWORK
DEVICE

920

FIG. 22

## INTERNATIONAL SEARCH REPORT

| International application No. |
|---|
| **PCT/CN2023/078680** |

**A. CLASSIFICATION OF SUBJECT MATTER**

H04W72/0446(2023.01)i

According to International Patent Classification (IPC) or to both national classification and IPC

**B. FIELDS SEARCHED**

Minimum documentation searched (classification system followed by classification symbols)

IPC:H04W H04Q

Documentation searched other than minimum documentation to the extent that such documents are included in the fields searched

Electronic data base consulted during the international search (name of data base and, where practicable, search terms used)

CNTXT, WPABS, WPABSC, ENTXTC, VEN, VCN, 3GPP: 零功耗, 时域, 资源, 窗口, 起始, 结束, 序列, 调度, 接入, 类型, AMP, zero, power, consumption, time, domain, resource, window, start, end, sequence, schedule, access, type

**C. DOCUMENTS CONSIDERED TO BE RELEVANT**

| Category* | Citation of document, with indication, where appropriate, of the relevant passages | Relevant to claim No. |
|---|---|---|
| X | WO 2022198387 A1 (GUANGDONG OPPO MOBILE TELECOMMUNICATIONS CORP., LTD.) 29 September 2022 (2022-09-29) <br> description, page 2, paragraph 11 to page 9, paragraph 5 | 1-76 |
| A | CN 111727656 A (OPPO GUANGDONG MOBILE TELECOMMUNICATIONS CO., LTD.) 29 September 2020 (2020-09-29) <br> entire document | 1-76 |
| A | CN 114386539 A (OPPO GUANGDONG MOBILE TELECOMMUNICATIONS CO., LTD.) 22 April 2022 (2022-04-22) <br> entire document | 1-76 |
| A | US 2022014397 A1 (QUALCOMM INCORPORATED) 13 January 2022 (2022-01-13) <br> entire document | 1-76 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 September 2023** | **23 October 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/078680**

| Patent document cited in search report | | | Publication date (day/month/year) | Patent family member(s) | | | Publication date (day/month/year) |
|---|---|---|---|---|---|---|---|
| WO | 2022198387 | A1 | 29 September 2022 | CN | 115398562 | A | 25 November 2022 |
| CN | 111727656 | A | 29 September 2020 | WO | 2020061945 | A1 | 02 April 2020 |
| | | | | TW | 202025839 | A | 01 July 2020 |
| CN | 114386539 | A | 22 April 2022 | | None | | |
| US | 2022014397 | A1 | 13 January 2022 | WO | 2022011038 | A1 | 13 January 2022 |
| | | | | IN | 202247066373 | A | 02 December 2022 |
| | | | | CN | 115804048 | A | 14 March 2023 |
| | | | | EP | 4179664 | A1 | 17 May 2023 |

Form PCT/ISA/210 (patent family annex) (July 2022)